# EUROPEAN PATENT APPLICATION

(11) **EP 4 844 512 A1**
(43) Date of publication of application: **25.11.2026**
(21) Application number: 26180534.5
(22) Date of filing: 22.05.2026
(51) Int. Cl.: G05B 19/418, G06N 20/00, H04L 67/12

(54) **SYSTEMS AND METHODS FOR CONTROLLING NETWORKED DEVICES**

(30) Priority: 23.05.2025 US 202563811370 P
(71) Applicant: NYPIT, Inc. (dba EverestLabs Inc.), Fremont, CA 94538 (US)
(72) Inventor: MALAPATI, Ravichandra, FREMONT, California, 94538 (US); SHARMA, Aneesh, FREMONT, California, 94538 (US); AMBATI, Jagadeesh, FREMONT, California, 94538 (US)
(74) Representative: Deambrogi, Edgardo

(57) **Abstract**

Aspects of the present disclosure provide a system for networked device control. The system includes an edge server which includes edge-server resources. The edge-server resources are configured to control a networked device, implement an edge-server machine-learning model, and cause the edge-server machine-learning model to generate, based on at least an operating parameter of the networked device and a current value of a debounce parameter of the networked device, an adjusted value of the debounce parameter. The debounce parameter at least in part characterizes occurrence of events for the networked device.

## Description

### CROSS-REFERENCE TO RELATED APPLICATION

This application claims the benefit of, and priority to, United States provisional patent application no. 63/811,370 filed May 23, 2025, the entire contents of which are incorporated by reference herein.

### FIELD

This disclosure relates generally to systems and methods for controlling networked devices.

### BACKGROUND

Networked actuators may be used in object sorting systems to selectively extract objects with particular qualities from mixtures of objects. For example, such actuators may be used in the recycling industry to capture and sort recyclable materials and waste. However, existing control systems for controlling networked actuators may not effectively identify or react to degradation of the networked actuators.

### SUMMARY

According to at least one embodiment, there is disclosed a system for networked device control, the system comprising: an edge server comprising edge-server resources configured to, at least: control a networked device; implement an edge-server machine-learning model; and cause the edge-server machine-learning model to generate, based on at least an operating parameter of the networked device and a current value of a debounce parameter of the networked device, an adjusted value of the debounce parameter, wherein the debounce parameter at least in part characterizes occurrence of events for the networked device.

In some embodiments, the edge-server resources are configured to cause the edge-server machine-learning model to generate the adjusted value of the debounce parameter based on, at least, a plurality of values of the operating parameter and the current value of debounce parameter.

In some embodiments, the edge-server resources are configured to cause the edge-server machine-learning model to generate the adjusted value of the debounce parameter by causing the edge-server machine-learning model to, at least: predict, based on at least the operating parameter, a degradation trend of the networked device; and generate, based on at least the degradation trend and the current value of the debounce parameter, the adjusted value of the debounce parameter.

In some embodiments, the edge-server resources are configured to cause the edge-server machine-learning model to predict the degradation trend based on, at least, a plurality of values of the operating parameter.

In some embodiments, the edge-server resources are further configured to, at least, receive sensor signals representing measurements of the operating parameter measured by a sensor.

In some embodiments, the edge-server resources are configured to receive the sensor signals from the sensor.

In some embodiments, the edge-server resources are further configured to, at least, in response to receiving a sensor signal representing a value of the operating parameter, infer the value of the operating parameter from the sensor signal.

In some embodiments, the sensor comprises an optical sensor.

In some embodiments, the optical sensor comprises a camera.

In some embodiments, the camera comprises a multispectral camera.

In some embodiments, the camera comprises a hyperspectral camera.

In some embodiments, the sensor comprises an X-ray detector.

In some embodiments, the edge-server resources are further configured to, at least, infer, based on at least a monitored parameter of the networked device and the current value of the debounce parameter, whether an event has occurred for the networked device.

In some embodiments, the monitored parameter comprises the operating parameter.

In some embodiments, the event comprises a change of state of the networked device.

In some embodiments, the event comprises an error event of the networked device.

In some embodiments: the debounce parameter comprises a time threshold parameter; the current value of the debounce parameter comprises a time value of the time threshold parameter; and the edge-server resources are configured to, when inferring whether the event has occurred for the networked device, infer that the event has occurred at least if the monitored parameter has deviated from a normal value range of the monitored parameter for a deviation time greater than the time value of the time threshold parameter.

In some embodiments: the debounce parameter comprises a normal operation parameter; the current value of the debounce parameter comprises a normal value range of the normal operation parameter, the normal value range comprising at least one possible value of the monitored parameter; and the edge-server resources are configured to, when inferring whether the event has occurred for the networked device, infer that the event has occurred at least if the monitored parameter has deviated from the normal value range for a deviation time greater than a threshold time value.

In some embodiments: the debounce parameter comprises a primary counter threshold parameter; the current value of the debounce parameter comprises a primary counter threshold value of the primary counter threshold parameter; the edge server resources are further configured to, at least: increment a primary counter if a current value of the monitored parameter is outside a normal value range of the monitored parameter; and decrement the primary counter if the current value of the monitored parameter is within the normal value range; and the edge-server resources are configured to, when inferring whether the event has occurred for the networked device, infer that the event has occurred at least if the primary counter is greater than the primary counter threshold value.

In some embodiments: the debounce parameter comprises a normal operation parameter; the current value of the debounce parameter comprises a normal value range of the normal operation parameter, the normal value range comprising at least one possible value of the monitored parameter; the edge server resources are further configured to, at least: increment a primary counter if a current value of the monitored parameter is outside the normal value range; and decrement the primary counter if the current value of the monitored parameter is within the normal value range; and the edge-server resources are configured to, when inferring whether the event has occurred for the networked device, infer that the event has occurred at least if the primary counter is greater than a primary counter threshold value.

In some embodiments: the debounce parameter comprises a primary counter threshold parameter; the current value of the debounce parameter comprises a primary counter threshold value of the primary counter threshold parameter; the edge server resources are further configured to, at least: increment a primary counter if a current value of the monitored parameter is outside a normal value range of the monitored parameter; decrement the primary counter if the current value of the monitored parameter is within the normal value range; and in response to the primary counter being greater than the primary counter threshold value, increment a secondary counter and set the primary counter to a default value less than the primary counter threshold value; and the edge-server resources are configured to, when inferring whether the event has occurred for the networked device, infer that the event has occurred at least if the secondary counter is greater than a secondary counter threshold value.

In some embodiments: the debounce parameter comprises a secondary counter threshold parameter; the current value of the debounce parameter comprises a secondary counter threshold value of the secondary counter threshold parameter; the edge server resources are further configured to, at least: increment a primary counter if a current value of the monitored parameter is outside a normal value range of the monitored parameter; decrement the primary counter if the current value of the monitored parameter is within the normal value range; and in response to the primary counter being greater than a primary counter threshold value, increment a secondary counter and set the primary counter to a default value less than the primary counter threshold value; and the edge-server resources are configured to, when inferring whether the event has occurred for the networked device, infer that the event has occurred at least if the secondary counter is greater than the secondary counter threshold value.

In some embodiments: the debounce parameter comprises a normal operation parameter; the current value of the debounce parameter comprises a normal value range of the normal operation parameter, the normal value range comprising at least one possible value of the monitored parameter; the edge server resources are further configured to, at least: increment a primary counter if a current value of the monitored parameter is outside the normal value range; decrement the primary counter if the current value of the monitored parameter is within the normal value range; and in response to the primary counter being greater than a primary counter threshold value, increment a secondary counter and set the primary counter to a default value less than the primary counter threshold value; and the edge-server resources are configured to, when inferring whether the event has occurred for the networked device, infer that the event has occurred at least if the secondary counter is greater than a secondary counter threshold value.

In some embodiments, the edge server resources are further configured to, at least, decrement the secondary counter if the current value of the monitored parameter is within the normal value range.

In some embodiments, the edge-server resources are further configured to, at least, when inferring whether the event has occurred for the networked device, infer whether the event has occurred based further on at least the degradation trend.

In some embodiments, the edge-server resources are further configured to, at least, in response to inferring that the event has occurred for the networked device, cause the edge-server machine-learning model to generate the adjusted value of the debounce parameter.

In some embodiments, the edge-server resources are further configured to, at least, in response to inferring that the event has occurred for the networked device: infer whether a corrective action by the networked device is required; and in response to inferring that the corrective action is required, control the networked device to perform the corrective action.

In some embodiments, the corrective action comprises reducing an operating speed of the networked device.

In some embodiments, the corrective action comprises shutting down the networked device.

In some embodiments, the edge-server resources are further configured to, at least, in response to inferring that the event has occurred for the networked device, record the event in an events database.

In some embodiments, the edge-server resources are further configured to, at least: retrieve an event record from the events database; and when inferring whether the event has occurred for the networked device, infer whether the event has occurred based further on at least the retrieved event record.

In some embodiments, the edge-server resources are further configured to, at least: retrieve an event record from an events database; and when inferring whether the event has occurred for the networked device, infer whether the event has occurred based further on at least the retrieved event record.

In some embodiments, the events database is persistent.

In some embodiments, the events database is stored on a persistent storage medium configured to retain at least the events database when powered and when unpowered.

In some embodiments, wherein the edge-server resources comprise the events database.

In some embodiments, the edge-server resources are further configured to, at least: in response to inferring that the event has occurred for the networked device, increment an event counter; and if the event counter is greater than an event counter threshold value, infer that a system-level event has occurred for the networked device.

In some embodiments, the edge-server resources are further configured to, at least, retrieve the current value of the debounce parameter from a debounce database.

In some embodiments, the edge-server resources are further configured to, at least, in response to generating the adjusted value of the debounce parameter, store the adjusted value of the debounce parameter in the debounce database.

In some embodiments, the edge-server resources are further configured to, at least, in response to generating the adjusted value of the debounce parameter, store the adjusted value of the debounce parameter in a debounce database.

In some embodiments, the edge-server resources are configured to store the adjusted value of the debounce parameter in the debounce database in place of the current value of the debounce parameter.

In some embodiments, the debounce database is persistent.

In some embodiments, the debounce database is stored on a persistent storage medium configured to retain at least the debounce database when powered and when unpowered.

In some embodiments, the edge-server resources comprise the debounce database.

In some embodiments, the edge-server resources store at least a plurality of codes defining the edge-server machine-learning model.

In some embodiments, the edge-server resources are configured to control the networked device by sending control signals to a subsystem controller configured to control the networked device in response to receiving the control signals.

In some embodiments, the system further comprises the subsystem controller.

In some embodiments, the subsystem controller comprises subsystem-controller resources configured to, at least: receive control signals from the edge-server resources; and in response to receiving the control signals, control the networked device.

In some embodiments, the subsystem controller resources are independent of the edge-server resources.

In some embodiments, the edge-server resources are further configured to, at least, attempt to establish a connection to a supervisory server.

In some embodiments, the edge-server resources are configured to attempt to establish the connection to the supervisory server at least in response to the operating parameter.

In some embodiments, the edge-server resources are further configured to, at least, in response to establishing the connection to the supervisory server, send, to the supervisory server, a synchronization request designating the debounce parameter.

In some embodiments, the edge-server resources are further configured to, at least, receive, from the supervisory server, a synchronization response comprising a supervisory-server value of the debounce parameter.

In some embodiments, the edge-server resources are further configured to, at least, in response to receiving the synchronization response, store the supervisory-server value of the debounce parameter in the debounce database.

In some embodiments, the edge-server resources are configured to store the supervisory-server value of the debounce parameter in place of the current value of the debounce parameter.

In some embodiments, the system further comprises the supervisory server, the supervisory server comprising supervisory-server resources configured to, at least: receive synchronization requests from at least the edge server; and in response to receiving, from the edge server, the synchronization request designating the debounce parameter, send, to the edge server, the synchronization response.

In some embodiments, the supervisory-server resources are independent of the edge-server resources.

In some embodiments, the operating parameter comprises a temperature of the networked device.

In some embodiments, the operating parameter comprises a fan speed of the networked device.

In some embodiments, the operating parameter comprises an error status of the networked device.

In some embodiments, the operating parameter comprises an operating speed of the networked device.

In some embodiments, the networked device comprises a networked actuator.

In some embodiments, the networked actuator comprises an air ejector.

In some embodiments, the networked actuator comprises a motor.

In some embodiments, the motor comprises an electric motor.

In some embodiments, the networked actuator comprises a robot.

In some embodiments, the networked actuator is operable to capture objects.

In some embodiments, the networked actuator is operable to capture the objects from a conveyor.

In some embodiments, the edge-server resources are further configured to, at least, infer an object capture success rate of the networked actuator based on the operating parameter.

In some embodiments, the objects comprise solid waste.

In some embodiments, the objects comprise recyclable materials.

In some embodiments, the networked actuator is operable to release a captured object.

In some embodiments, the networked actuator is operable to release the captured object by propelling the captured object away from the networked actuator.

In some embodiments, the networked actuator is operable to release the captured object by depositing the captured object into a container.

In some embodiments, the subsystem-controller resources are further configured to, at least: cause the networked actuator to capture an object from a first conveyor; and cause the networked actuator to deposit the object back onto the first conveyor.

In some embodiments, the subsystem-controller resources are further configured to, at least: cause the networked actuator to capture an object from a first conveyor; and cause the networked actuator to deposit the object onto a second conveyor different from the first conveyor.

In some embodiments, the subsystem-controller resources are further configured to, at least: select a capturable object based on at least a quality of the capturable object; and cause the networked actuator to capture the selected capturable object.

In some embodiments: the edge-server resources are further configured to, at least, cause the edge-server machine-learning model to generate, based on at least an edge-server operating parameter of the edge server and a current value of an edge-server debounce parameter of the edge server, an adjusted value of the edge-server debounce parameter; and the edge-server debounce parameter at least in part characterizes occurrence of events for the edge server.

According to at least one embodiment, there is disclosed a control system comprising: an edge server comprising edge-server resources configured to, at least: control a networked device; implement an edge-server machine-learning model; and cause the edge-server machine-learning model to generate, based on at least an operating parameter of the system and a current value of a debounce parameter of the system, an adjusted value of the debounce parameter, wherein the debounce parameter at least in part characterizes occurrence of events for the system.

According to at least one embodiment, there is disclosed a method for networked device control, the method comprising: monitoring an operating parameter of the networked device; retrieving, with an edge server, a current value of a debounce parameter of the networked device, the debounce parameter at least in part characterizing occurrence of events for the networked device; causing, with the edge server, an edge-server machine-learning model to generate, based at least on the operating parameter and the current value of the debounce parameter, an adjusted value of the debounce parameter; and storing the adjusted value of the debounce parameter.

In some embodiments, causing the edge-server machine-learning model to generate the adjusted value of the debounce parameter comprises causing the edge-server machine-learning model to generate the adjusted value of the debounce parameter based on, at least, a plurality of values of the operating parameter and the current value of debounce parameter.

In some embodiments, causing the edge-server machine-learning model to generate the adjusted value of the debounce parameter comprises causing the edge-server machine-learning model to: predict, based on at least the operating parameter, a degradation trend of the networked device; and generate, based on at least the degradation trend and the current value of the debounce parameter, the adjusted value of the debounce parameter.

In some embodiments, causing the edge-server machine-learning model to predict the degradation trend comprises causing the edge-server machine-learning model to predict the degradation trend based on, at least, a plurality of values of the operating parameter.

In some embodiments, monitoring the operating parameters of the networked device comprises monitoring the operating parameters of the networked device with a sensor operable to measure the operating parameter of the networked device.

In some embodiments, monitoring the operating parameters of the networked device with the sensor comprises receiving, with the edge server, sensor signals representing measurements of the operating parameter measured by the sensor.

In some embodiments, receiving the sensor signals with the edge server comprises receiving the sensor signals from the sensor.

In some embodiments, the method further comprises, in response to receiving a sensor signal representing a value of the operating parameter, inferring, with the edge server, the value of the operating parameter from the sensor signal.

In some embodiments, the sensor comprises an optical sensor.

In some embodiments, the optical sensor comprises a camera.

In some embodiments, the camera comprises a multispectral camera.

In some embodiments, the camera comprises a hyperspectral camera.

In some embodiments, the sensor comprises an X-ray detector.

In some embodiments, the method further comprises inferring, with the edge server, whether an event has occurred for the networked device based on, at least, a monitored parameter of the networked device and the current value of the debounce parameter.

In some embodiments, the monitored parameter comprises the operating parameter.

In some embodiments, the event comprises a change of state of the networked device.

In some embodiments, the event comprises an error event of the networked device.

In some embodiments: the debounce parameter comprises a time threshold parameter; the current value of the debounce parameter comprises a time value of the time threshold parameter; and inferring whether the event has occurred for the networked device comprises inferring that the event has occurred at least if the monitored parameter has deviated from a normal value range of the monitored parameter for a deviation time greater than the time value of the time threshold parameter.

In some embodiments: the debounce parameter comprises a normal operation parameter; the current value of the debounce parameter comprises a normal value range of the normal operation parameter, the normal value range comprising at least one possible value of the monitored parameter; and inferring whether the event has occurred for the networked device comprises inferring that the event has occurred at least if the monitored parameter has deviated from the normal value range for a deviation time greater than a threshold time value.

In some embodiments: the debounce parameter comprises a primary counter threshold parameter; the current value of the debounce parameter comprises a primary counter threshold value of the primary counter threshold parameter; and inferring whether the event has occurred for the networked device comprises: incrementing, with the edge server, a primary counter if a current value of the monitored parameter is outside a normal value range of the monitored parameter; decrementing, with the edge server, the primary counter if the current value of the monitored parameter is within the normal value range; and inferring that the event has occurred at least if the primary counter is greater than the primary counter threshold value.

In some embodiments: the debounce parameter comprises a normal operation parameter; the current value of the debounce parameter comprises a normal value range of the normal operation parameter, the normal value range comprising at least one possible value of the monitored parameter; and inferring whether the event has occurred for the networked device comprises: incrementing, with the edge server, a primary counter if a current value of the monitored parameter is outside the normal value range; decrementing, with the edge server, the primary counter if the current value of the monitored parameter is within the normal value range; and inferring that the event has occurred at least if the primary counter is greater than a primary counter threshold value.

In some embodiments: the debounce parameter comprises a primary counter threshold parameter; the current value of the debounce parameter comprises a primary counter threshold value of the primary counter threshold parameter; and inferring whether the event has occurred for the networked device comprises: incrementing, with the edge server, a primary counter if a current value of the monitored parameter is outside a normal value range of the monitored parameter; decrementing, with the edge server, the primary counter if the current value of the monitored parameter is within the normal value range; in response to the primary counter being greater than the primary counter threshold value, incrementing, with the edge server, a secondary counter and setting the primary counter to a default value less than the primary counter threshold value; and inferring that the event has occurred at least if the secondary counter is greater than a secondary counter threshold value.

In some embodiments: the debounce parameter comprises a secondary counter threshold parameter; the current value of the debounce parameter comprises a secondary counter threshold value of the secondary counter threshold parameter; and inferring whether the event has occurred for the networked device comprises: incrementing, with the edge server, a primary counter if a current value of the monitored parameter is outside a normal value range of the monitored parameter; decrementing, with the edge server, the primary counter if the current value of the monitored parameter is within the normal value range; in response to the primary counter being greater than a primary counter threshold value, incrementing, with the edge server, a secondary counter and setting the primary counter to a default value less than the primary counter threshold value; and inferring that the event has occurred at least if the secondary counter is greater than the secondary counter threshold value.

In some embodiments: the debounce parameter comprises a normal operation parameter; the current value of the debounce parameter comprises a normal value range of the normal operation parameter, the normal value range comprising at least one possible value of the monitored parameter; and inferring whether the event has occurred for the networked device comprises: incrementing, with the edge server, a primary counter if a current value of the monitored parameter is outside the normal value range; decrementing, with the edge server, the primary counter if the current value of the monitored parameter is within the normal value range; in response to the primary counter being greater than a primary counter threshold value, incrementing, with the edge server, a secondary counter and setting the primary counter to a default value less than the primary counter threshold value; and inferring that the event has occurred at least if the secondary counter is greater than a secondary counter threshold value.

In some embodiments, inferring whether the event has occurred for the networked device further comprises decrementing, with the edge server, the secondary counter if the current value of the monitored parameter is within the normal value range.

In some embodiments, inferring whether the event has occurred for the networked device comprises inferring whether the event has occurred based further on at least the degradation trend.

In some embodiments, causing the edge-server machine-learning model to generate the adjusted value of the debounce parameter comprises causing the edge-server machine-learning model to generate the adjusted value of the debounce parameter in response to inferring that the event has occurred for the networked device.

In some embodiments, the method further comprises, in response to inferring that the event has occurred for the networked device: inferring, with the edge server, whether a corrective action by the networked device is required; and in response to inferring that the corrective action is required, controlling, with the edge server, the networked device to perform the corrective action.

In some embodiments, the corrective action comprises reducing an operating speed of the networked device.

In some embodiments, the corrective action comprises shutting down the networked device.

In some embodiments, the method of any one of clauses 92 to 108 further comprising, in response to inferring that the event has occurred for the networked device, recording, with the edge server, the event in an events database.

In some embodiments, the method further comprises retrieving, with the edge server, an event record from the events database, wherein inferring whether the event has occurred for the networked device comprises inferring whether the event has occurred based further on at least the retrieved event record.

In some embodiments, the method further comprises retrieving, with the edge server, an event record from an events database, wherein inferring whether the event has occurred for the networked device comprises inferring whether the event has occurred based further on at least the retrieved event record.

In some embodiments, the events database is persistent.

In some embodiments, the method further comprises storing the events database on a persistent storage medium configured to retain at least the events database when powered and when unpowered.

In some embodiments, the method further comprises in response to inferring that the event has occurred for the networked device, incrementing, with the edge server, an event counter; and if the event counter is greater than the event counter threshold value, inferring, with the edge server, that a system-level event has occurred for the networked device.

In some embodiments, retrieving the current value of the debounce parameter comprises retrieving, with the edge server, the current value of the debounce parameter from a debounce database.

In some embodiments, storing the adjusted value of the debounce parameter comprises storing, with the edge server, the adjusted value of the debounce parameter in the debounce database.

In some embodiments, storing the adjusted value of the debounce parameter comprises storing, with the edge server, the adjusted value of the debounce parameter in a debounce database.

In some embodiments, storing the adjusted value of the debounce parameter in the debounce database comprises storing the adjusted value of the debounce parameter in the debounce database in place of the current value of the debounce parameter.

In some embodiments, the debounce database is persistent.

In some embodiments, the method further comprises storing the debounce database on a persistent storage medium configured to retain at least the debounce database when powered and when unpowered.

In some embodiments, the method further comprises controlling the networked device with the edge server.

In some embodiments, controlling the networked device comprises sending control signals from the edge server to a subsystem controller configured to control the networked device in response to receiving the control signals.

In some embodiments, the method further comprises attempting, with the edge server, to establish a connection to a supervisory server.

In some embodiments, attempting to establish the connection to the supervisory server comprises attempting to establish the connection to the supervisory server at least in response to the operating parameter.

In some embodiments, the method further comprises, in response to establishing the connection to the supervisory server, sending, from the edge server to the supervisory server, a synchronization request designating the debounce parameter.

In some embodiments, the method further comprises receiving, with the edge server, from the supervisory server, a synchronization response comprising a supervisory-server value of the debounce parameter.

In some embodiments, the method further comprises, in response to receiving the synchronization response with the edge server, storing, with the edge server, the supervisory-server value of the debounce parameter in the debounce database.

In some embodiments, storing the supervisory-server value of the debounce parameter in the debounce database comprises storing the supervisory-server value of the debounce parameter in the debounce database in place of the current value of the debounce parameter.

In some embodiments, the operating parameter comprises a temperature of the networked device.

In some embodiments, the operating parameter comprises a fan speed of the networked device.

In some embodiments, the operating parameter comprises an error status of the networked device.

In some embodiments, the operating parameter comprises an operating speed of the networked device.

In some embodiments, the networked device comprises a networked actuator.

In some embodiments, the networked actuator comprises an air ejector.

In some embodiments, the networked actuator comprises a motor.

In some embodiments, the motor comprises an electric motor.

In some embodiments, the networked actuator comprises a robot.

In some embodiments, the networked actuator is operable to capture objects.

In some embodiments, the networked actuator is operable to capture the objects from a conveyor.

In some embodiments, the method further comprises inferring, with the edge server, an object capture success rate of the networked actuator based on the operating parameter.

In some embodiments, the objects comprise solid waste.

In some embodiments, the objects comprise recyclable materials.

In some embodiments, the method further comprises causing the networked actuator to capture an object.

In some embodiments, the method further comprises causing the networked actuator to release the captured object.

In some embodiments, causing the networked actuator to release the captured object comprises causing the networked actuator to propel the captured object away from the networked actuator.

In some embodiments, causing the networked actuator to release the captured object comprises causing the networked actuator to deposit the captured object into a container.

In some embodiments: causing the networked actuator to capture the object comprises causing the networked actuator to capture the object from a first conveyor; and causing the networked actuator to release the captured object comprises causing the networked actuator to deposit the captured object back onto the first conveyor.

In some embodiments: causing the networked actuator to capture the object comprises causing the networked actuator to capture the object from a first conveyor; and causing the networked actuator to release the captured object comprises causing the networked actuator to deposit the captured object onto a second conveyor different from the first conveyor.

In some embodiments, the method further comprises: selecting a capturable object based on at least a quality of the object; and causing the networked actuator to capture the selected capturable object.

In some embodiments, the method further comprises causing, with the edge server, the edge-server machine-learning model to generate, based on at least an edge-server operating parameter of the edge server and a current value of an edge-server debounce parameter of the edge server, an adjusted value of the edge-server debounce parameter, wherein the edge-server debounce parameter at least in part characterizes occurrence of events for the edge server.

According to at least one embodiment, there is disclosed a control method for a system comprising: controlling, with an edge server of the system, a networked device of the system; monitoring an operating parameter of the system; retrieving, with the edge server, a current value of a debounce parameter of the system, the debounce parameter at least in part characterizing occurrence of events for the system; causing, with the edge server, an edge-server machine-learning model to generate, based at least on the operating parameter and the current value of the debounce parameter, an adjusted value of the debounce parameter; and storing the adjusted value of the debounce parameter.

Other aspects and features will become apparent to those ordinarily skilled in the art upon review of the following description of illustrative embodiments in conjunction with the accompanying figures.

### BRIEF DESCRIPTION OF THE DRAWINGS

Example embodiments are illustrated in referenced figures of the drawings. It is intended that the embodiments and figures disclosed herein are to be considered illustrative rather than restrictive.
FIG. 1 is a schematic diagram illustrating a control system for one or more networked devices according to one embodiment.
FIG. 2 schematically illustrates an example of a processor circuit of a subsystem controller of the control system of FIG. 1.
FIG. 3 schematically illustrates an example of a processor circuit of an edge server of the control system of FIG. 1.
FIG. 4 schematically illustrates an example of a processor circuit of a supervisory server of the control system of FIG. 1.
FIG. 5 is a flow chart of a method for controlling networked devices according to one embodiment.
FIG. 6 is a flow chart of a method for inferring whether an event has occurred for a networked device of the object sorting system of FIG. 1.

### DETAILED DESCRIPTION

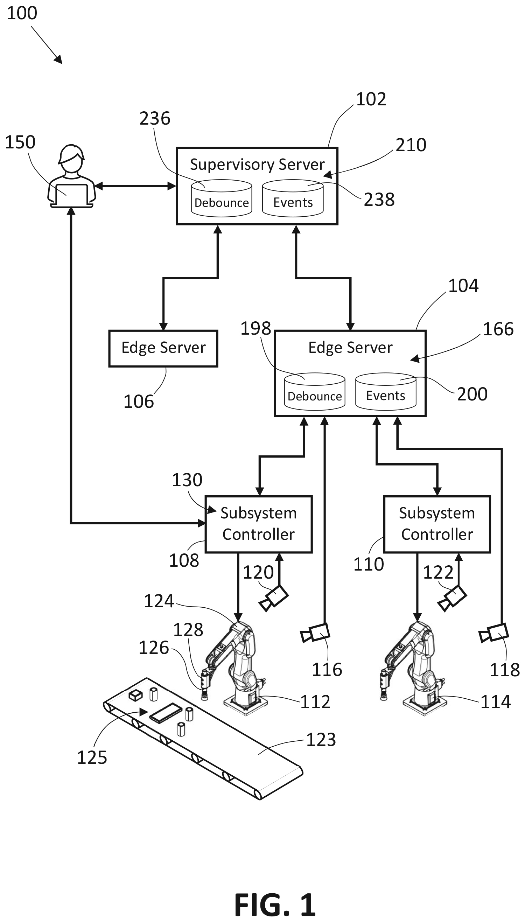

Referring to FIG. 1, a control system according to one embodiment is shown generally at 100 and includes a supervisory server 102, edge servers 104 and 106, subsystem controllers 108 and 110, networked actuators 112 and 114, remote networked sensors 116 and 118, and local networked sensors 120 and 122. In general, in the embodiment shown, the supervisory server 102 is in communication with at least the edge servers 104 and 106, the edge server 104 is in communication with at least the subsystem controllers 108 and 110 and the remote networked sensors 116 and 118, the subsystem controller 108 is in communication with at least the networked actuator 112 and the local networked sensor 120, and the subsystem controller 110 is in communication with at least the networked actuator 114 and the local networked sensor 122. However, it will be appreciated that the supervisory server 102 may also be in communication with other edge servers (not shown) in addition to the edge servers 104 and 106. Similarly, the edge server 104 may also be in communication with other subsystem controllers (not shown) in addition to the subsystem controllers 108 and 110, and may also be in communication with other sensors (not shown) in addition to the remote networked sensors 116 and 118. Further, the edge server 106 may also be in communication with one or more subsystem controllers (not shown) and/or sensors (not shown).

The networked actuators 112 and 114, the remote networked sensors 116 and 118, and the local networked sensors 120 and 122 may more broadly be referred to as "networked devices". In this context, the term "networked device" may also refer to a type of device other than an actuator or a sensor, such as, for example, a networked conveyor, a networked actuator cleaning tool, or a networked software module. Moreover, in some embodiments, the control system 100 may further include such networked devices other than actuators or sensors.

Embodiments are not in any way restricted to the example shown in FIG. 1, or to any particular number of edge servers, subsystem controllers, remote networked sensors, networked actuators, local networked sensors, or other networked devices. More, fewer, and/or different components or elements may be provided or supported in other embodiments. This applies not only in respect of the example shown in FIG. 1, but also to other examples herein. All examples are intended solely for illustrative purposes, and embodiments are not limited thereto.

Very generally, in the embodiment shown, each of the networked actuators 112 and 114 is controlled by the edge server 104 through a respective one of the subsystem controllers 108 and 110. In operation, each networked actuator 112 and 114 may be monitored by one or more of the networked sensors 116, 118, 120, and 122. Such sensor(s) may provide operational information to the controlling edge server 104 and/or to the respective one of the subsystem controllers 108 and 110 that that edge server/subsystem controller may use to make decisions regarding control of that networked actuator. Further, the activity of the edge servers 104 and 106 may be overseen or supervised by the supervisory server 102. For example, as shown in FIG. 1, the edge server 104 may control the networked actuator 112 through the subsystem controller 108, based at least in part on operational information received from the remote networked sensor 116 and the local networked sensor 120, and overseen by the supervisory server 102. In some embodiments, one or more of the networked sensors 116, 118, 120, and 122 may also be controlled by the edge server 104. For example, in some embodiments, the local networked sensor 120 may be controlled by the edge server 104 through the subsystem controller 108, and the local networked sensor 122 may be controlled by the edge server 104 through the subsystem controller 110.

The networked actuators 112 and 114 are generally controllable via control signals sent from the subsystem controllers 108 and 110, respectively. That is, the networked actuator 112 is operable to receive one or more actuator control signals from the subsystem controller 108, and to move and/or perform other tasks in response to receiving such signals. Similarly, the networked actuator 114 is operable to receive one or more actuator control signals from the subsystem controller 110, and to move and/or perform other tasks in response to receiving such signals. For example, in some embodiments, the networked actuators 112 and 114 may thus be controllable to capture and release objects. Such objects may include recyclable materials and/or solid waste being conveyed on a conveyor in a recycling system, and the networked actuators 112 and 114 may be operable to selectively capture these objects from the conveyor and then release them elsewhere as part of a sorting process in the recycling system. For example, in the embodiment shown in FIG. 1, the networked actuator 112 is operable to selectively capture objects from a conveyor 123 conveying recyclable materials and solid waste, shown generally at 125.

In the embodiment shown, each of the networked actuators 112 and 114 includes a robot and a capture apparatus. In general, the capture apparatus is operable to capture/secure a target object, and the robot is operable to position the capture apparatus for capturing/securing the target object. For example, the networked actuator 112 includes a robot arm 124 which supports and positions a capture apparatus 126 including an air ejector 128. The air ejector 128 (also known as a vacuum ejector or a Venturi pump) may generate suction to allow the capture apparatus 126 to capture objects. However, other embodiments may differ. For example, some other embodiments may include one or more networked actuators having a capture apparatus which includes a pneumatic magnet, a pneumatic gripper, a suction cup, or a combination thereof, in addition to or instead of an air ejector. In some other embodiments, one or more of the networked actuators may include one or more motors for positioning its respective capture apparatus, instead of or in addition to a robot arm. In such embodiments, the one or more motors may include, for example, one or more electric motors.

The remote networked sensors 116 and 118 are generally positioned and operable to measure and monitor one or more operating parameters of the networked actuators 112 and 114, and are also operable to send one or more sensor signals representing measured values of the one or more operating parameters to the edge server 104. The local networked sensors 120 and 122 are also generally positioned and operable to measure and monitor one or more operating parameters of the networked actuators 112 and 114, but are operable to send one or more sensor signals representing measured values of the one or more operating parameters to the subsystem controllers 108 and 110, respectively, instead of to the edge server 104. Upon receiving such sensor signals, the subsystem controllers 108 and 110 may store the corresponding measured values of the one or more operating parameters, use the measured values in controlling the networked actuators 112 and 114, and/or forward the signals to the edge server 104.

Each of the remote networked sensors 116 and 118 and the local networked sensors 120 and 122 may include, for example, an optical sensor, an X-ray detector, or a combination thereof. In some embodiments, the optical sensor may be or may include a camera, such as a multispectral camera and/or a hyperspectral camera. The one or more operating parameters monitored by the remote networked sensors 116 and 118 and the local networked sensors 120 and 122 may include, for example, one or more temperatures of the networked actuators 112 and 114, one or more fan speeds of the networked actuators 112 and 114, one or more error statuses of the networked actuators 112 and 114, and/or one or more operating speeds of the networked actuators 112 and 114.

As noted at least above, in some embodiments, one or more of the networked sensors 116, 118, 120, and 122 may be controllable by the edge server 104. In some embodiments, the edge server may control the networked sensors 116, 118, 120, and 122 in generally the same manner as it controls the networked actuators 112 and 114 - that is, via control signals sent from the edge server 104 itself and/or from a respective one of the subsystem controllers 108 and 110. As an example, the edge server 104 may control a sensor to adjust a measurement rate, measurement resolution, and/or field of view of that sensor.

In the embodiment shown, the remote networked sensor 116 is operable to monitor one or more operating parameters of the networked actuator 112, and to send sensor signals representing measured values of these one or more operating parameters to the edge server 104, while the remote networked sensor 118 is operable to monitor one or more operating parameters of the networked actuator 114, and to send sensor signals representing measured values of these one or more operating parameters to the edge server 104. However, in other embodiments, each networked actuator may be monitored by more than one remote networked sensor, and/or each remote networked sensor may monitor more than one networked actuator. Similarly, in the embodiment shown, the local networked sensor 120 is operable to monitor one or more operating parameters of the networked actuator 112, and to send sensor signals representing measured values of these one or more operating parameters to the subsystem controller 108, while the local networked sensor 122 operable to monitor one or more operating parameters of the networked actuator 114, and to send sensor signals representing measured values of these one or more operating parameters to the subsystem controller 110. However, in other embodiments, any networked actuator may be monitored by more than one local networked sensor, and/or any local networked sensor may monitor more than one networked actuator.

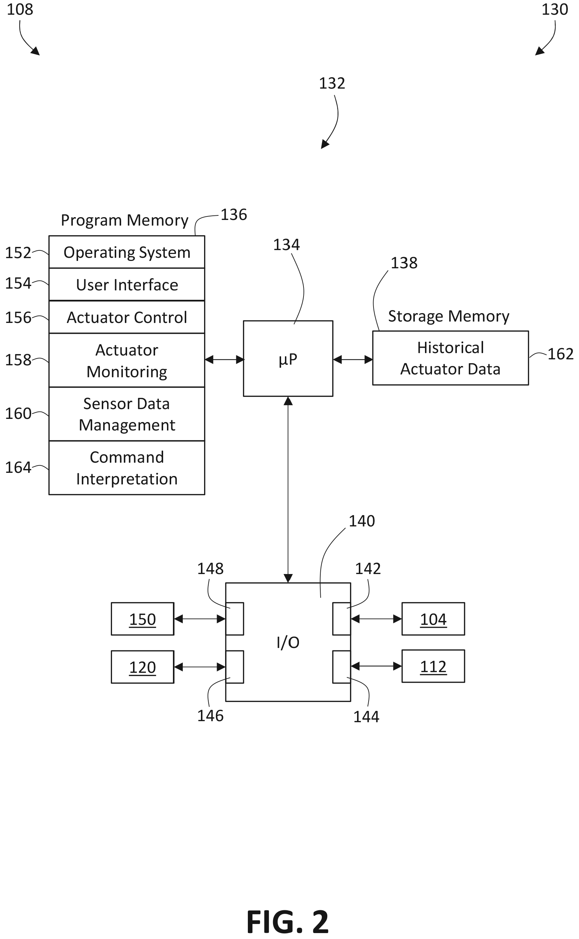

Referring now to FIGS. 1 and 2, the subsystem controller 108 includes subsystem controller resources shown generally at 130. The subsystem controller resources 130 include a processor circuit shown generally at 132. The processor circuit 132 includes a central processing unit ("CPU") or microprocessor in some embodiments, and is shown by way of example in FIG. 2 as a microprocessor 134 ("µP"). The processor circuit 132 also includes a program memory 136, a storage memory 138, and an input/output ("I/O") module 140, each in communication with the microprocessor 134. In general, the program memory 136 stores program codes that, when executed by the microprocessor 134, cause the processor circuit 132 to implement functions of the subsystem controller resources 130 such as those described herein, for example. Further, in general, the storage memory 138 includes stores for storing storage codes as described herein, for example. As used herein, the term "codes" generally includes software and computer-executable instructions. The program memory 136 and the storage memory 138 may be implemented in one or more of the same or different computer-readable storage media, which in various embodiments may include one or more of a read-only memory ("ROM"), random access memory ("RAM"), a hard disc drive ("HDD"), a solid-state drive ("SSD"), and other computer-readable and/or computer-writable storage media.

The I/O module 140 may include any of various types of devices or components such as one or more signal interfaces, analog-to-digital converters ("ADCs"), digital-to-analog converters ("DACs"), receivers, transmitters, and/or other circuitry to receive, produce, and transmit signals as described herein, for example. In the embodiment shown, the I/O module 140 includes an edge server signal interface 142 for sending signals to the edge server 104 and/or receiving signals from the edge server 104, an actuator control interface 144 for sending signals to the networked actuator 112 and/or receiving signals from the networked actuator 112, a sensor signal interface 146 for sending signals to at least the local networked sensor 120 and/or receiving signals from at least the local networked sensor 120, and an external computer signal interface 148 for sending and signals to and an external computer 150 and/or receiving signals from the external computer 150.

The I/O module 140 shown in FIG. 2 is an example only and may differ in other embodiments. For example, other embodiments may include more, fewer, or different interfaces. More generally, the processor circuit 132 shown in FIG. 2 is an example only, and other embodiments may differ. For example, in other embodiments, the subsystem controller resources 130 may include different hardware, different software, or both. Such different hardware may include more than one microprocessor, one or more central processing units ("CPUs"), one or more machine learning chips, one or more cloud server computers, one or more other alternatives to the microprocessor 134, discrete logic circuits, or an application-specific integrated circuit ("ASIC"), or combinations of one or more thereof, for example.

In the embodiment shown, the program memory 136 stores operating system program codes 152 of an operating system. The program memory 136 also stores user interface program codes 154 that, when executed by the microprocessor 134, cause the processor circuit 132 to control an interactive user interface of the subsystem controller 108. Users may use such an interactive user interface to, for example, adjust one or more control settings of the subsystem controller 108. Users may access such an interactive user interface, for example, from the external computer 150 through the external computer signal interface 148.

Still referring to FIGS. 1 and 2, the program memory 136 further stores actuator control program codes 156 that, when executed by the microprocessor 134, cause the processor circuit 132 to send, by way of the actuator control interface 144, one or more actuator control signals to the networked actuator 112. As noted at least above, the networked actuator 112 is operable to move and/or perform other tasks, such as capturing and/or releasing objects, in response to receiving such actuator control signals. Therefore, using the actuator control program codes 156, the subsystem controller 108 is operable to control the networked actuator 112 to, for example, capture and/or release an object.

The program memory 136 further stores actuator monitoring program codes 158 that, when executed by the microprocessor 134, cause the processor circuit 132 to receive, from the local networked sensor 120, by way of the sensor signal interface 146, one or more sensor signals representing values, measured by the local networked sensor 120, of one or more operating parameters of the networked actuator 112. Thus, the subsystem controller 108 may use the local networked sensor 120 to monitor at least the one or more operating parameters of the networked actuator 112.

The program memory 136 further stores sensor data management program codes 160 that, when executed by the microprocessor 134, cause the processor circuit 132 to, in response to receiving a sensor signal representing at least one value of the one or more operating parameters of the networked actuator 112, forward, by way of the edge server signal interface 142, the received sensor signal on to the edge server 104. In some embodiments, the sensor data management program codes 160 may also, when executed by the microprocessor 134, cause the processor circuit 132 to, in response to receiving the sensor signal representing the at least one value of the one or more operating parameters of the networked actuator 112, infer the at least one value of the one or more operating parameters from the received sensor signal. As used herein, the term "infer", in the context of inferring a value of an operating parameter from one or more sensor signals, refers generally to obtaining the value from the sensor signals, and may involve, for example, decoding the sensor signal(s) and/or otherwise interpreting the sensor signal(s). The sensor data management program codes 160 may further cause the processor circuit 132 to store the inferred at least one value in the storage memory 138. For example, storage codes representing such values of the one or more operating parameters of the networked actuator 112 may be stored in - and retrieved from - a historical actuator data store 162 in the storage memory 138. The subsystem controller 108 may retrieve and use such stored values of the one or more operating parameters when controlling the networked actuator 112 (for example, as reference values).

The program memory 136 further stores command interpretation program codes 164 that, when executed by the microprocessor 134, cause the processor circuit 132 to receive, from the edge server 104, by way of the edge server signal interface 142, one or more control signals for controlling the networked actuator 112, and, in response to receiving the one or more control signals from the edge server 104, control the networked actuator 112 using the actuator control program codes 156 (that is, to send actuator control signals to the networked actuator 112) according to the received control signals. In some embodiments, the command interpretation program codes 164 may also, when executed by the microprocessor 134, cause the processor circuit 132 to receive, from the external computer 150, by way of the external computer signal interface 148, one or more control signals for controlling the networked actuator 112, and, in response to receiving the one or more control signals from the external computer 150, control the networked actuator 112 using the actuator control program codes 156 according to the received control signals. For example, the edge server 104 or the external computer 150 may send control signals to the subsystem controller 108 to cause the subsystem controller 108 to modify how the subsystem controller 108 controls the networked actuator 112. As a more specific example, the edge server 104 or the external computer 150 may send control signals to the subsystem controller 108 to cause the subsystem controller 108 to control the networked actuator 112 to perform a corrective action, such as reducing its operating speed or shutting down.

In operation, the subsystem controller 108 may generally control the networked actuator 112 to cause the networked actuator 112 to capture a piece of solid waste, for example, from a conveyor conveying at least solid waste, such as the conveyor 123 (conveying recyclable materials and solid waste 125). The subsystem controller 108 may then control the networked actuator 112 to cause the networked actuator 112 to release the captured piece of the solid waste. For example, the subsystem controller 108 may control the networked actuator 112 to cause the networked actuator 112 to propel the captured piece of the solid waste away from the networked actuator 112, and/or may control the networked actuator 112 to cause the networked actuator 112 to deposit the captured piece of the solid waste into a solid waste container (for example, for sorting the solid waste). The subsystem controller 108 may also control the networked actuator 112 to cause the networked actuator 112 to deposit the captured piece of the solid waste back onto the conveyor 123, or onto another different conveyor.

Similarly, the subsystem controller 108 may generally control the networked actuator 112 to cause the networked actuator 112 to capture a piece of recyclable materials, for example, from a conveyor conveying at least recyclable materials, such as the conveyor 123 or a different conveyor. The subsystem controller 108 may then control the networked actuator 112 to cause the networked actuator 112 to release the captured piece of the recyclable materials. For example, the subsystem controller 108 may control the networked actuator 112 to cause the networked actuator 112 to propel the captured piece of the recyclable materials away from the networked actuator 112, and/or may control the networked actuator 112 to cause the networked actuator 112 to deposit the captured piece of the recyclable materials into a recyclable materials container (for example, for sorting the recyclable materials). The subsystem controller 108 may also control the networked actuator 112 to cause the networked actuator 112 to deposit the captured piece of the recyclable materials back onto the conveyor, or onto another different conveyor.

In some embodiments, the subsystem controller 108 may select an object, for example, from a conveyor, based on at least a quality of the object, and may then control the networked actuator 112 to cause the networked actuator 112 to capture the selected at least one object. In such embodiments, the subsystem controller 108 may assess the quality of the object based at least on measurements of the object by one or more sensors (not shown) other than the remote networked sensor 116 or the local networked sensor 120.

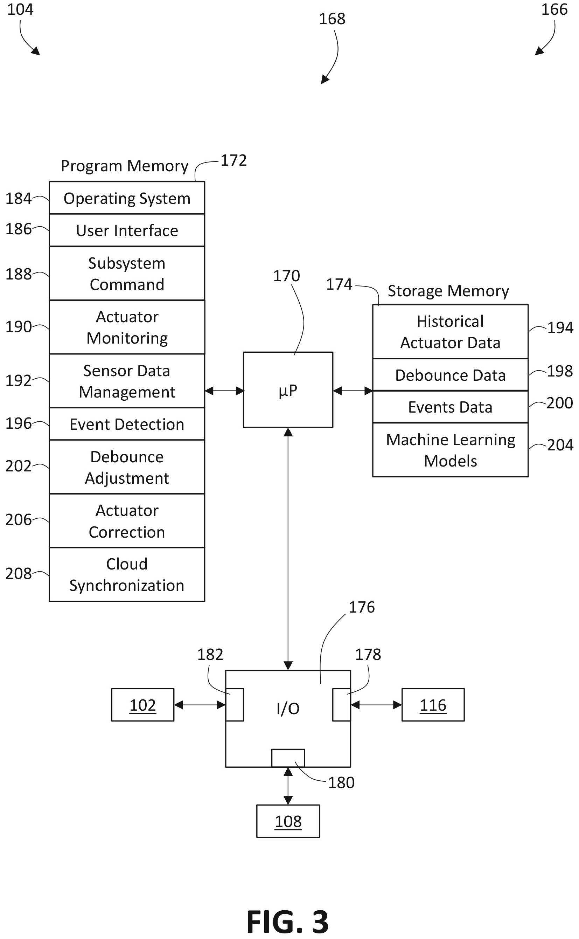

Referring now to FIGS. 1 and 3, the edge server 104 includes edge server resources shown generally at 166. The edge server resources 166 include a processor circuit shown generally at 168. The processor circuit 168 may generally be similar to the processor circuit 132 of the subsystem controller 108, and includes a CPU or microprocessor 170, as well as a program memory 172, a storage memory 174, and an I/O module 176, each in communication with the microprocessor 170. In general, the program memory 172 stores program codes that, when executed by the microprocessor 170, cause the processor circuit 168 to implement functions of the edge server 104 such as those described herein, for example. Further, in general, the storage memory 174 includes stores for storing storage codes as described herein, for example. The program memory 172 and the storage memory 174 may be implemented in one or more of the same or different computer-readable storage media, which in various embodiments may include one or more of ROM, RAM, an HDD, an SSD, and other computer-readable and/or computer-writable storage media.

Like the I/O module 140 of the subsystem controller 108, the I/O module 176 may include various signal interfaces, ADCs, DACs, receivers, transmitters, and/or other circuitry to receive, produce, and transmit signals as described herein, for example. In the embodiment shown, the I/O module 176 includes a sensor signal interface 178 for sending signals to at least the remote networked sensors 116 and 118 and/or receiving signals from at least the remote networked sensors 116 and 118, a subsystem controller signal interface 180 for sending signals to at least the subsystem controllers 108 and 110 and/or receiving signals from at least the subsystem controllers 108 and 110 , and a supervisory server signal interface 182 for sending signals to the supervisory server 102 and/or receiving signals from the supervisory server 102.

The I/O module 176 shown in FIG. 3 is an example only and may differ in other embodiments. For example, other embodiments may include more, fewer, or different interfaces. More generally, the processor circuit 168 shown in FIG. 3 is an example only, and other embodiments may differ. For example, in other embodiments, the edge server resources 166 may include different hardware, different software, or both. Such different hardware may include more than one microprocessor, one or more CPUs, one or more machine learning chips, one or more cloud server computers, one or more other alternatives to the microprocessor 170, discrete logic circuits, an ASIC, or combinations of one or more thereof, for example.

In the embodiment shown, the program memory 172 stores operating system program codes 184 of an operating system. The program memory 172 also stores user interface program codes 186 that, when executed by the microprocessor 170, cause the processor circuit 168 to control an interactive user interface of the edge server 104. Users may use such an interactive user interface to, for example, adjust one or more control settings of the edge server 104. Users may access such an interactive user interface, for example, from the external computer 150 by way of remote access through the supervisory server 102 and the supervisory server signal interface 182.

Still referring to FIGS. 1 and 3, the program memory 172 further stores subsystem command program codes 188 that, when executed by the microprocessor 170, cause the processor circuit 168 to send, by way of the subsystem controller signal interface 180, one or more control signals to the subsystem controller 108 to control the networked actuator 112. Therefore, using the subsystem command program codes 188, the edge server 104 is operable to control the networked actuator 112 through the subsystem controller 108.

The program memory 172 further stores actuator monitoring program codes 190 that, when executed by the microprocessor 170, cause the processor circuit 168 to receive, from the remote networked sensor 116, by way of the sensor signal interface 178, one or more sensor signals representing values, measured by the remote networked sensor 116, of one or more operating parameters of the networked actuator 112. In some embodiments, the actuator monitoring program codes 190 may also, when executed by the microprocessor 170, cause the processor circuit 168 to receive, from the subsystem controller 108, by way of the subsystem controller signal interface 180, one or more forwarded sensor signals representing values, measured by the local networked sensor 120, of the one or more operating parameters of the networked actuator 112. Thus, the edge server 104 may use one or both of the remote networked sensor 116 and the local networked sensor 120 to monitor at least the one or more operating parameters of the networked actuator 112.

The program memory 172 further stores sensor data management program codes 192 that, when executed by the microprocessor 170, cause the processor circuit 168 to, in response to receiving a sensor signal from the remote networked sensor 116 representing at least one value of the one or more operating parameters of the networked actuator 112 or a forwarded sensor signal from the subsystem controller 108 representing at least one value of the one or more operating parameters of the networked actuator 112, infer the at least one value of the one or more operating parameters from the received sensor signal or the received forwarded sensor signal. In some embodiments, the sensor data management program codes 192 may also, when executed by the microprocessor 170, cause the processor circuit 168 to, in response to inferring the at least one value of the one or more operating parameters, store the inferred at least one value of the one or more operating parameters in the storage memory 174. For example, storage codes representing such values of the one or more operating parameters of the networked actuator 112 may be stored in - and retrieved from - a historical actuator data store 194 in the storage memory 174. Values of networked actuator operating parameters thus stored may be later retrieved and used by the edge server 104, for example, when predicting and/or analysing performance of the networked actuator 112.

During operation, networked devices such as the networked actuator 112 may undergo a change of operational state. For example, the networked actuator 112 may enter an error state from a normal state, or may exit an error state to return to a normal state. Sensors which monitor one or more operating parameters of the networked actuator 112, such as the remote networked sensor 116 and/or the local networked sensor 120, may detect such a change of state as a corresponding change in one or more of the monitored operating parameters. For example, a sensor may detect the networked actuator 112 entering an error state when an operating parameter of the networked actuator 112 which is monitored by that sensor deviates outside of normal operating values. As noted above, sensors monitoring the networked actuator 112, including the remote networked sensor 116 and/or the local networked sensor 120, may send sensor signals representing measured values of monitored operating parameters of the networked actuator 112 to the edge server 104. Therefore, such sensors may, upon detecting a change in one or more of the monitored operating parameters which corresponds to a change of state of the networked actuator 112, effectively convey a detected change of state to the edge server 104. That is, the edge server 104 may monitor the networked actuator 112 for changes of state through one or more sensors (for example, the remote networked sensor 116 and/or the local networked sensor 120) monitoring one or more operating parameters of the networked actuator 112. In some embodiments, a sensor signal may be used for diagnostics, and in at least this sense a sensor signal may be considered a form of diagnostic information, and a sensor may be considered to provide diagnostic information about the networked actuator 112 to the edge server 104.

A change of state of the networked actuator 112 from a normal state to an error state may correspond, for example, to a malfunction or breakdown of the networked actuator 112, or to some other failure event which requires corrective action to be taken in order for the networked actuator 112 to return to normal operation. However, during operation, monitored operating parameters of the networked actuator 112 may regularly fluctuate back and forth between normal values and values corresponding to an error state of the networked actuator 112. Thus, the edge server 104 may frequently receive, from sensors monitoring the networked actuator 112, diagnostic information (that is, sensor signals) indicating that the networked actuator 112 has entered an error state and subsequently exited that error state, even when the networked actuator 112 has not undergone a failure event and does not require corrective action. To distinguish between such false positives and actual failure events of the networked actuator 112, the edge server 104 may use debounce parameters to filter incoming sensor signals representing monitored operating parameters of the networked actuator 112. That is, the edge server 104 may use one or more debounce parameters to debounce one or more monitored operating parameters of the networked actuator 112.

Very generally, a debounce parameter at least in part characterizes the occurrence of a change of state - that is, of an "event" - for a device such as the networked actuator 112. In other words, a debounce parameter may provide one or more conditions or criteria for defining an event, or for detecting or determining whether an event has occurred for the device. In some embodiments, a debounce parameter may include one or more values which represent limits, thresholds, or boundaries of a corresponding monitored operating parameter beyond which that monitored operating parameter may be inferred to be indicating occurrence of an event. For example, a debounce parameter of the networked actuator 112 may be a time threshold parameter which may have one or more time values (such as a minimum time of anomalous/abnormal operation required to infer an event), a counter threshold parameter which may have one or more counter threshold values (such as a minimum count of anomalous/abnormal operation occurrences required to infer an event), or a normal operation parameter which may include one or more ranges of normal operating values for at least one monitored operating parameter of the networked actuator 112. One or more debounce parameters may be used with a monitored operating parameter of the networked actuator 112 to filter incoming sensor signals corresponding to that monitored operating parameter. For example, when the monitored operating parameter deviates from its normal values - which may be defined by a normal value range of a normal operation debounce parameter of the monitored operating parameter - to values corresponding to an error state, the edge server 104 may only infer that the networked actuator 112 has undergone a failure event if the deviation from normal values persists for a time greater than a current time value of a time threshold debounce parameter of the monitored operating parameter, and/or if the monitored operating parameter has deviated from the normal values a number of times greater than a counter threshold value of a counter threshold debounce parameter of the monitored operating parameter. Otherwise, the edge server 104 may simply disregard the deviation as noise.

More specifically, as shown in FIG. 3, the program memory 172 of the edge server resources 166 stores event detection program codes 196 that, when executed by the microprocessor 170, cause the processor circuit 168 to, in response to inferring at least one value of one or more monitored operating parameters of the networked actuator 112 from a sensor signal received from the remote networked sensor 116 or from a forwarded sensor signal received from the subsystem controller 108, retrieve at least one current value of one or more debounce parameters from storage codes representing such values stored in a debounce data store 198 in the storage memory 174. Based on at least the inferred at least one value of the one or more monitored operating parameters and the retrieved at least one current value of the one or more debounce parameters, the event detection program codes 196 may further cause the processor circuit 168 to infer whether an event has occurred for the networked actuator 112. For example, upon receiving a sensor signal representing a value of a monitored operating parameter of the networked actuator 112 and inferring that value of the monitored operating parameter from the sensor signal, the edge server 104 may - according to the event detection program codes 196 - retrieve a normal value range of the monitored operating parameter from the debounce data store 198 and compare the inferred value of the monitored operating parameter to the retrieved normal value range. In some embodiments, the retrieved normal value range of the monitored operating parameter may be a current value of a normal operation debounce parameter of the monitored operating parameter, and may include one or more possible values of the monitored operating parameter that correspond to normal operation of the networked actuator 112. Following the comparison between the inferred value and the normal value range, the edge server 104 may then retrieve, from the debounce data store 198, one or more current values of one or more threshold debounce parameters to evaluate whether or not a deviation from normal values corresponds to an event occurring for the networked actuator 112. As explained above, an event in this context may include, for example, a change of state of the networked actuator 112, a failure event, and/or an error event.

In some embodiments, the one or more threshold debounce parameters may include a time threshold debounce parameter of the monitored operating parameter, and the edge server 104 may retrieve a current time value of the time threshold debounce parameter. In such embodiments the edge server 104 may also retrieve one or more historical values of the monitored operating parameter from the historical actuator data store 194. Using the inferred - that is, current - value of the monitored operating parameter, the retrieved normal value range of the monitored operating parameter, the retrieved historical values of the monitored operating parameter, and the retrieved current time value of the time threshold debounce parameter, the edge server 104 may, as explained in part above, infer that an event has occurred for the networked actuator 112 if the values of the monitored operating parameter - including the inferred/current value - have deviated from the normal value range for a time greater than the current time value.

In some embodiments, the one or more threshold debounce parameters may include one or more counter threshold debounce parameters of the monitored operating parameter, such as a primary counter threshold debounce parameter and a secondary counter threshold debounce parameter. In such embodiments, the edge server 104 may retrieve a primary counter threshold value of the primary counter threshold debounce parameter and a secondary counter threshold value of the secondary counter threshold debounce parameter from the debounce data store 198, along with a current value of a primary counter and a current value of a secondary counter. The edge server 104 may use the inferred (current) value of the monitored operating parameter and the retrieved normal value range of the monitored operating parameter, along with the primary counter and the primary counter threshold value and - in some embodiments - the secondary counter and the secondary counter threshold value, to determine whether an event has occurred for the networked actuator 112. More specifically, if the inferred value of the monitored operating parameter is outside of the normal value range, then the edge server 104 may increase or increment the primary counter (for example, by a value of one). Conversely, if the inferred value is within the normal value range, then then the edge server 104 may decrease or decrement the primary counter (for example, by a value of one). The edge server 104 may then compare the updated value of the primary counter to the primary counter threshold value. In some embodiments, if the primary counter is greater than the primary counter threshold value, then the edge server 104 may infer that an event has occurred for the networked actuator 112. In some embodiments, if the primary counter is greater than the primary counter threshold value, then the edge server 104 may increase or increment the secondary counter (for example, by a value of one), set the primary counter to a default value (for example, zero) less than the primary counter threshold value, and compare the updated value of the secondary counter to the secondary counter threshold value. If the secondary counter is greater than the secondary counter threshold value, then the edge server 104 may infer that an event has occurred for the networked actuator 112. Further, in such embodiments, the edge server 104 may decrease or decrement the secondary counter (for example, by a value of one) if the inferred value of the monitored operating parameter is within the normal value range.

In addition to monitoring the networked actuator 112 for the occurrence of events such as failure events, the edge server 104 may also track the number of events that have occurred for the networked actuator 112. Such tracking may be used, for example, in determining whether the networked actuator 112 is undergoing a system-level event, such as a partial or complete system failure. More specifically, in some embodiments, the event detection program codes 196 may also, when executed by the microprocessor 170, cause the processor circuit 168 to, in response to inferring that an event has occurred for the at least one networked actuator, retrieve a current value of an event counter from the debounce data store 198 and increase or increment the event counter (for example, by a value of one). Further, the event detection program codes 196 may also, when executed by the microprocessor 170, cause the processor circuit 168 to retrieve an event counter threshold value of an event counter threshold debounce parameter, and compare the event counter to the event counter threshold value. If the event counter is greater than the event counter threshold value, then the edge server 104 may infer that a system-level event has occurred for the networked actuator 112.

In some embodiments, the event detection program codes 196 may also, when executed by the microprocessor 170, cause the processor circuit 168 to, in response to inferring that an event has occurred for the networked actuator 112, record the event in the storage memory 174. For example, storage codes representing records of events for the networked actuator 112 may be stored in - and retrieved from - an events data store 200 in the storage memory 174. The edge server 104 may retrieve such event records from the events data store 200 and may, for example, use the retrieved event records - along with current, predefined normal, and historical values values of the monitored operating parameter and current values of debounce parameters - for inferring whether event has occurred for the networked actuator 112. That is, when inferring whether an event has occurred for the networked actuator 112, the edge server 104 may - according to the event detection program codes 196 - infer whether the event has occurred based further on, at least, at least one retrieved event record.

In general, as networked devices such as the networked actuators 112 and 114 are used in operation and are exposed to various environmental conditions such as dust, moisture, heat, and cold, their performance may degrade over time. As the performance of a networked device degrades, its operating parameters may fluctuate more frequently between normal values and error state values and/or may remain at error state values for longer periods of time before returning to normal values, even when the networked device is still generally operational. Correspondingly, as the performance of the networked device degrades, the system controlling it (for example, the edge server 104) may be increasingly likely to detect a failure event when no failure has occurred (that is, a false positive).

To account for such degradation in, for example, the networked actuator 112, the edge server 104 may adjust some or all debounce parameters associated with the networked actuator 112, such that the edge server 104, when executing the event detection program codes 196, may be less likely to infer that an event has occurred for the networked actuator 112 for a given set of values of an operating parameter of the networked actuator 112. The edge server 104 may adjust debounce parameters based on, for example, one or more monitored operating parameters of the networked actuator 112. The edge server 104 may also, or instead, adjust debounce parameters based on predictions of degradation trends of the networked actuator 112. As used herein, a degradation trend may refer to a rate of deterioration of performance of a networked device, such as the networked actuator 112. In some embodiments, the monitored operating parameters used to adjust a given debounce parameter may be the same monitored operating parameters that that debounce parameter is used to debounce. In some embodiments, the monitored operating parameters used to adjust a given debounce parameter may not be the same monitored operating parameters that that debounce parameter is used to debounce. In the embodiment shown, the edge server 104 may adjust debounce parameters of the networked actuator 112 using edge-server machine-learning models.

More specifically, the program memory 172 of the edge server resources 166 further stores debounce adjustment program codes 202 that, when executed by the microprocessor 170, cause the processor circuit 168 to implement one or more edge-server machine-learning models and to cause the one or more edge-server machine-learning models to generate, based on one or more monitored operating parameters of the networked actuator 112 and at least one current value of one or more debounce parameters of the networked actuator 112, at least one adjusted value of the one or more debounce parameters. As used herein, the term "cause", in the context of causing a machine-learning model to generate an output value (for example, an adjusted value of a debounce parameter), includes inputting/providing one or more input values (for example, a current value of the debounce parameter and one or more values of an operating parameter) to the machine-learning model and running/executing the machine-learning model to generate the output value using the one or more input values. Further, as used herein, the term "generate", in the context of generating adjusted values of one or more debounce parameters, refers to providing the adjusted values and may include, for example, calculating, computing, determining, and/or otherwise producing the adjusted values of one or more debounce parameters. Further still, as used herein, the term "adjusted value", in the context of a debounce parameter, may refer to a new value and/or an updated value of the debounce parameter.

Storage codes representing the one or more edge-server machine learning models may be stored in and retrieved from a machine learning model store 204 in the storage memory 174. That is, the edge-server resources 166 may store codes defining the edge-server machine learning models. In some embodiments, the debounce adjustment program codes 202 may also, when executed by the microprocessor 170, cause the processor circuit 168 to cause the one or more edge-server machine-learning models to predict, based on at least the one or more operating parameters of the networked actuator 112, a degradation trend of the networked actuator 112. In such embodiments, the debounce adjustment program codes 202 may also, when executed by the microprocessor 170, cause the processor circuit 168 to cause the one or more edge-server machine-learning models to generate, based on at least the predicted degradation trend and the at least one current value of the one or more debounce parameters, the at least one adjusted value of the one or more debounce parameters. For example, upon receiving sensor signals representing one or more values of a monitored operating parameter of the networked actuator 112 and inferring those values of the monitored operating parameter from the sensor signals, the edge server 104 may - according to the debounce adjustment program codes 202 - implement an edge-server machine learning model and cause the implemented edge-server machine-learning model to use the inferred values of the monitored operating parameter to predict a degradation trend of the networked actuator 112. Based on this predicted degradation trend and a current value of a debounce parameter retrieved from the debounce data store 198, the edge server 104 may then cause the implemented edge-server machine learning model to generate an adjusted value of the debounce parameter. The adjusted value of the debounce parameter may be, for example, different from the retrieved current value of the debounce parameter. In some embodiments, the debounce adjustment program codes 202 may also, when executed by the microprocessor 170, cause the processor circuit 168 to infer an object capture success rate of the networked actuator 112 based on one or more monitored operating parameters. In such embodiments, the debounce adjustment program codes 202 may also, when executed by the microprocessor 170, cause the processor circuit 168 to cause the one or more edge-server machine-learning models to predict the degradation trend of the networked actuator 112 based further on the inferred object capture success rate.

In some embodiments, the debounce adjustment program codes 202 may also, when executed by the microprocessor 170, cause the processor circuit 168 to, in response to generating an adjusted value of a debounce parameter of the networked actuator, store the generated adjusted value of the debounce parameter in the debounce data store 198 of the storage memory 174. In some such embodiments, the debounce adjustment program codes 202 may, when executed by the microprocessor 170, cause the processor circuit 168 to store the generated adjusted value of the debounce parameter in the debounce data store 198 in place of a current value of the debounce parameter (that is, which was used to generate the adjusted value of the debounce parameter).

In some embodiments, the edge server 104 may also use predicted degradation trends of the networked actuator 112 to determine whether the networked actuator 112 has undergone, for example, a failure event. That is, the event detection program codes 196 may also, when executed by the microprocessor 170, cause the processor circuit 168 to infer whether an event has occurred for the networked actuator 112 based further on, at least, a degradation trend predicted by the edge server 104 according to the debounce adjustment program codes 202.

In some embodiments, the edge server 104 may also adjust debounce parameters of the networked actuator 112 in response to detecting that networked actuator 112 has undergone, for example, a failure event. That is, the debounce adjustment program codes 202 may also, when executed by the microprocessor 170, cause the processor circuit 168 to, in response to the edge server 104 inferring - according to the event detection program codes 196 - that an event has occurred for the networked actuator 112, cause the one or more edge-server machine-learning models to generate the at least one adjusted value of the one or more debounce parameters.

When the edge server 104 detects that the networked actuator 112 has experienced a failure event and requires corrective action to be taken to return to normal operation, the edge server 104 may control the networked actuator 112 to perform such a corrective action. More specifically, the program memory 172 of the edge server resources 166 stores actuator correction program codes 206 that, when executed by the microprocessor 170, cause the processor circuit 168 to, in response to inferring that an event has occurred for the networked actuator 112, infer whether one or more corrective actions by the networked actuator 112 are required, and, in response to inferring that the one or more corrective actions are required, control the networked actuator 112 to perform the one or more corrective actions. Such corrective actions may include, for example, reducing an operating speed of the networked actuator 112 and/or shutting down the networked actuator 112.

Although the use of debounce parameters by the edge server 104 to filter incoming diagnostic information has been described above in the context of detecting failure/error events or other changes of state for the networked actuator 112, it will be appreciated that debounce parameters may similarly be used by the edge server 104 to detect events or changes for other actuators in the control system 100, such as the networked actuator 114. Further, debounce parameters may also or instead be used by the edge server 104 to filter incoming diagnostic information regarding other networked devices of the control system 100, such as one or more of the networked sensors 116, 118, 120, and 122 and/or one or more software components or modules of the edge server 104. As more specific examples, the edge server 104 may use debounce parameters in determining whether a sensor is overloaded (and thus not capturing information at a desired resolution), and/or whether a software module of the edge server 104 is suffering from a memory leak or buffering issue.

As noted above, the activity of the edge server 104 may generally be overseen or supervised by the supervisory server 102. Such supervision generally entails back-and-forth communication between the edge server 104 and the supervisory server 102. Accordingly, the program memory 172 of the edge server resources 166 further stores cloud synchronization program codes 208 that, when executed by the microprocessor 170, cause the processor circuit 168 to establish, or at least to attempt to establish, by way of the supervisory server signal interface 182, a connection with the supervisory server 102. In some embodiments, the cloud synchronization program codes 208 may, when executed by the microprocessor 170, cause the processor circuit 168 to attempt to establish a connection with the supervisory server 102 in response to one or more operating parameters of the networked actuator 112. The cloud synchronization program codes 208 may also, when executed by the microprocessor 170, cause the processor circuit 168 to, in response to establishing a connection to the supervisory server 102, send, to the supervisory server 102, a synchronization request designating one or more debounce parameters of the networked actuator 112. The cloud synchronization program codes 208 may also, when executed by the microprocessor 170, cause the processor circuit 168 to, receive, from the supervisory server 102, a synchronization response which may include at least one supervisory-server value of the one or more debounce parameters. The cloud synchronization program codes 208 may also, when executed by the microprocessor 170, cause the processor circuit 168 to, in response to receiving a synchronization response from the supervisory server 102, store the at least one received supervisory-server value of the one or more debounce parameters in the debounce data store 198 in the storage memory 174. In some embodiments, the cloud synchronization program codes 208 may, when executed by the microprocessor 170, cause the processor circuit 168 to store the at least one received supervisory-server value of the one or more debounce parameters in the debounce data store 198 in place of at least one current value of the one or more debounce parameters.

In some embodiments, the cloud synchronization program codes 208 may also, when executed by the microprocessor 170, cause the processor circuit 168 to send, by way of the supervisory server signal interface 182, one or more data signals to the supervisory server 102. Such data signals may represent, for example, one or more values of one or more operating parameters of the networked actuator 112, one or more values of one or more debounce parameters of the networked actuator 112, one or more event records for the networked actuator 112, or combinations thereof. As explained above, the edge server 104 may retrieve values of operating parameters of the networked actuator 112 from the historical actuator data store 194, may retrieve values of debounce parameters of the networked actuator 112 from the debounce data store 198, and may retrieve event records for the networked actuator 112 from the events data store 200.

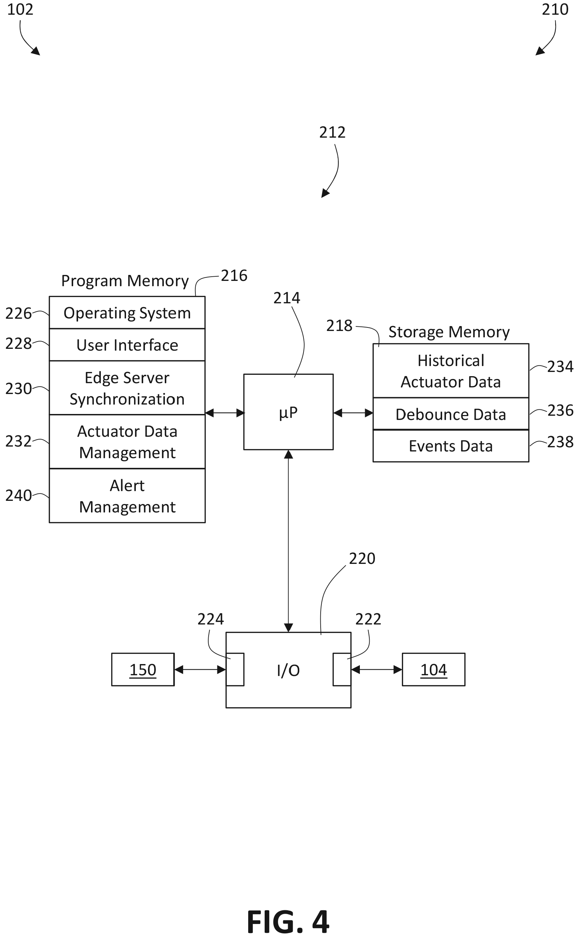

Referring now to FIGS. 1 and 4, the supervisory server 102 includes supervisory server resources shown generally at 210. The supervisory server resources 210 include a processor circuit shown generally at 212. The processor circuit 212 may generally be similar to the processor circuit 132 of the subsystem controller 108 and/or the processor circuit 168 of the edge server 104, and includes a CPU or microprocessor 214, as well as a program memory 216, a storage memory 218, and an I/O module 220, each in communication with the microprocessor 214. In general, the program memory 216 stores program codes that, when executed by the microprocessor 214, cause the processor circuit 212 to implement functions of the supervisory server 102 such as those described herein, for example. Further, in general, the storage memory 218 includes stores for storing storage codes as described herein, for example. The program memory 216 and the storage memory 218 may be implemented in one or more of the same or different computer-readable storage media, which in various embodiments may include one or more of ROM, RAM, an HDD, an SSD, and other computer-readable and/or computer-writable storage media.

Like the I/O module 140 of the subsystem controller 108 and/or the I/O module 176 of the edge server 104, the I/O module 220 may include various signal interfaces, ADCs, DACs, receivers, transmitters, and/or other circuitry to receive, produce, and transmit signals as described herein, for example. In the embodiment shown, the I/O module 220 includes an edge server signal interface 222 for sending signals to at least the edge servers 104 and 106 and/or receiving signals from at least the edge servers 104 and 106, and an external computer signal interface 224 for sending signals to the external computer 150 and/or receiving signals from the external computer 150.

The I/O module 220 shown in FIG. 4 is an example only and may differ in other embodiments. For example, other embodiments may include more, fewer, or different interfaces. More generally, the processor circuit 212 shown in FIG. 3 is an example only, and other embodiments may differ. For example, in other embodiments, the supervisory server resources 210 may include different hardware, different software, or both. Such different hardware may include more than one microprocessor, one or more CPUs, one or more machine learning chips, one or more cloud server computers, one or more other others to the microprocessor 214, discrete logic circuits, an ASIC, or combinations of one or more thereof, for example.

In the embodiment shown, the program memory 216 stores operating system program codes 226 of an operating system. The program memory 216 also stores user interface program codes 228 that, when executed by the microprocessor 214, cause the processor circuit 212 to control an interactive user interface of the supervisory server 102. Users may use such an interactive user interface to, for example, adjust one or more control settings of the supervisory server 102. Users may access such an interactive user interface, for example, from the external computer 150 through the external computer signal interface 224.

Still referring to FIGS. 1 and 4, the program memory 216 further stores edge server synchronization program codes 230 that, when executed by the microprocessor 214, cause the processor circuit 212 to receive synchronization requests, by way of the edge server signal interface 222, from at least the edge server 104. As explained above, such synchronization requests may designate one or more debounce parameters of the networked actuator 112. The edge server synchronization program codes 230 also, when executed by the microprocessor 214, cause the processor circuit 212 to, in response to receiving, from the edge server 104, a synchronization request designating one or more debounce parameters of the networked actuator 112, send, to the edge server 104, a synchronization response. As also explained above, such a synchronization response may include at least one supervisory-server value of the one or more debounce parameters designated in the synchronization request.

The program memory 216 further stores actuator data management program codes 232 that, when executed by the microprocessor 214, cause the processor circuit 212 to receive, by way of the edge server signal interface 222, from at least the edge server 104, one or more data signals which may represent, for example, one or more values of one or more operating parameters of the networked actuator 112, one or more values of one or more debounce parameters of the networked actuator 112, one or more event records for the networked actuator 112, or combinations thereof. The actuator data management program codes 232 may also, when executed by the microprocessor 214, cause the processor circuit 212 to, in response to receiving a data signal representing one or more values of one or more operating parameters of the networked actuator 112 from the edge server 104, infer the one or more values of the one or more operating parameters, and store the inferred one or more values in the storage memory 218. For example, storage codes representing such values of the one or more operating parameters of the networked actuator 112 may be stored in - and retrieved from - a historical actuator data store 234 in the storage memory 218. The actuator data management program codes 232 may also, when executed by the microprocessor 214, cause the processor circuit 212 to, in response to receiving a data signal representing one or more values of one or more debounce parameters of the networked actuator 112 from the edge server 104, infer the one or more values of the one or more debounce parameters, and store the inferred one or more values in the storage memory 218. For example, storage codes representing such values of the one or more debounce parameters of the networked actuator 112 may be stored in - and retrieved from - a debounce data store 236 in the storage memory 218. The actuator data management program codes 232 may also, when executed by the microprocessor 214, cause the processor circuit 212 to, in response to receiving a data signal representing one or more event records for the networked actuator 112 from the edge server 104, store the one or more event records in the storage memory 218. For example, storage codes representing such event records for the networked actuator 112 may be stored in - and retrieved from - a events data store 238 in the storage memory 218. The supervisory server 102 may retrieve such stored operating parameters, debounce parameters, and/or event records from the historical actuator data store 234, the debounce data store 236, and/or the events data store 238, respectively, and may, for example, use the retrieved information to infer supervisory-server values of debounce parameters of the networked actuator 112.

The program memory 216 further stores alert management program codes 240 that, when executed by the microprocessor 214, cause the processor circuit 212 to send, by way of the external computer signal interface 224, one or more alerts to the external computer 150. The supervisory server 102 may send an alert to the external computer 150, for example, in response to receiving a data signal representing one or more event records for the networked actuator 112 from the edge server 104. In particular, the supervisory server 102 may send an alert to the external computer 150 upon receiving a signal from the edge server 104 indicating that a system-level event has occurred for the networked actuator 112. More generally, the supervisory server 102 may send an alert to the external computer 150 if a situation arises where human intervention is required.

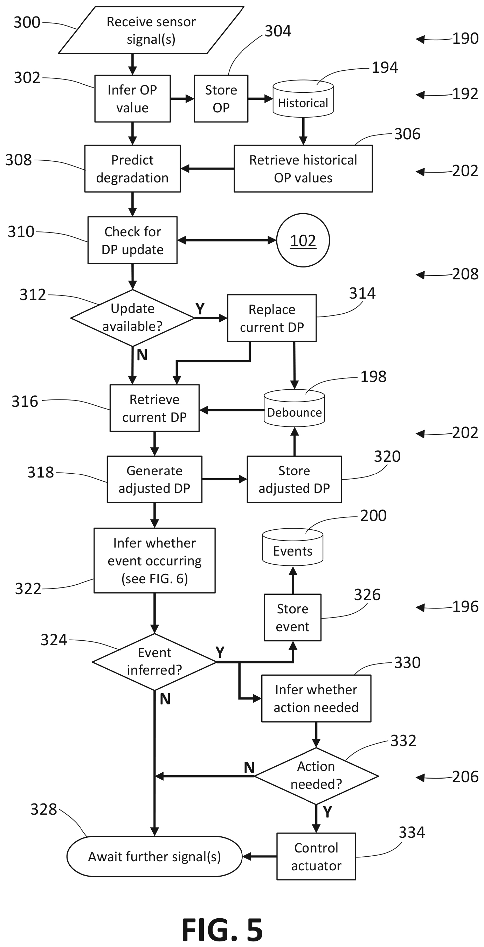

An exemplary implementation, by the edge server 104, of the actuator monitoring program codes 190, the sensor data management program codes 192, the event detection program codes 196, the debounce adjustment program codes 202, the actuator correction program codes 206, and the cloud synchronization program codes 208 according to one embodiment is illustrated schematically in FIG. 5. Beginning at block 300, the edge server 104 may, according to the actuator monitoring program codes 190, receive a sensor signal representing a value of an operating parameter ("OP") of the networked actuator 112, measured - for example - by the remote networked sensor 116 and/or the local networked sensor 120. In response, at block 302, the edge server 104 may, according to the sensor data management program codes 192, infer the value of the operating parameter from the received sensor signal, and may then, at block 304, store the inferred value of the operating parameter in the historical actuator data store 194.

Subsequently, at block 306, the edge server 104 may, according to the debounce adjustment program codes 202, retrieve historical values of the operating parameter from the historical actuator data store 194. At block 308, the edge server 104 may implement an edge-server machine-learning model and cause the implemented edge-server machine-learning model to use the inferred value of the operating parameter and the retrieved historical values of the operating parameter to predict a degradation trend of the networked actuator 112.

At block 310, the edge server 104 may, according to the cloud synchronization program codes 208, check with the supervisory server 102 whether updated values of relevant debounce parameters ("DP") of the networked actuator 112 are available. That is, the edge server 104 may attempt to establish a connection with the supervisory server 102, and, if successful, may send, to the supervisory server 102, a synchronization request designating one or more debounce parameters, and may receive, from the supervisory server 102, a synchronization response which may include supervisory-server values of the designated debounce parameters. The debounce parameters may include, for example, a primary counter threshold debounce parameter, a secondary counter threshold debounce parameter, and a normal operation parameter. At block 312, if updated values of the debounce parameters are available, then the edge server 104 may, at block 314, replace current values of the debounce parameters in the debounce data store 198 with available supervisory-server values of those debounce parameters, before moving on to debounce parameter adjustment at block 316. If updated values of the debounce parameters are not available from the supervisory server 102, then the edge server 104 may move directly to block 316.

At block 316, the edge server 104 may, according to the debounce adjustment program codes 202, retrieve current values of the debounce parameters from the debounce data store 198. If the debounce parameters were updated at blocks 310, 312, and 314, these values may include the supervisory-server values obtained from the supervisory server 102. At block 318, the edge server 104 may then cause the implemented edge-server machine-learning model to use the retrieved current values of the debounce parameters and the predicted degradation trend (from block 308) to generate adjusted values of the debounce parameters. The edge server 104 may also, at block 320, store the adjusted values of the debounce parameters in the debounce data store 198.

At block 322, the edge server 104 may, according to the event detection program codes 196, use the adjusted values of the debounce parameters and the inferred value of the operating parameter (from block 302) to infer whether an event has occurred for the networked actuator 112. At block 324, if the edge server 104 infers that an event has occurred, then the edge server 104 may, at block 326, record the inferred event in the events data store 200. Otherwise, the edge server 104 may, at block 328, stop and await further incoming sensor signals.

Further, if the edge server 104 infers that an event has occurred at block 324, the edge server 104 may then also, at block 330, according to the actuator correction program codes 206, infer whether corrective action by the networked actuator 112 is needed to respond to the event. At block 332, if corrective action is not needed, then the edge server 104 may stop and await further incoming sensor signals at block 328. However, if corrective action is needed, then the edge server 104 may, at block 334, control the networked actuator 112 to perform the corrective action, before proceeding to block 328 to await further incoming sensor signals.

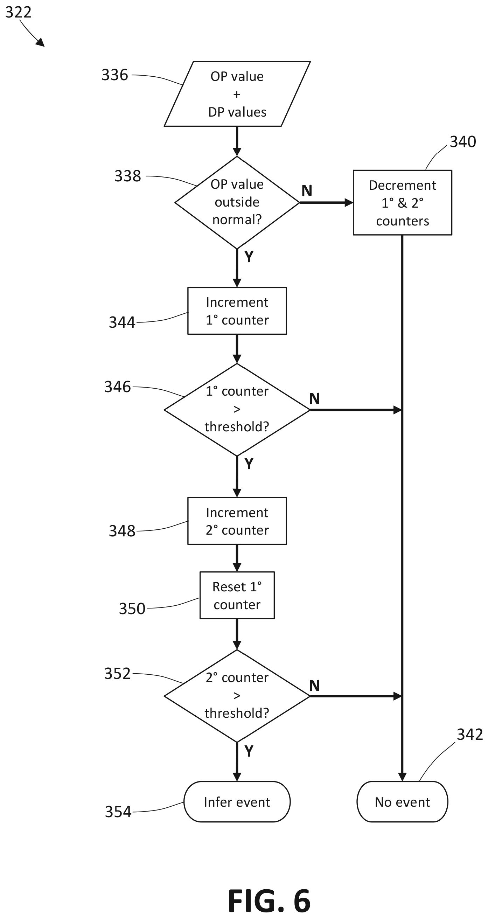

FIG. 6 schematically illustrates one embodiment of a process for inferring whether an event has occurred for the networked actuator 112 - that is, as executed at block 322 in FIG. 5. At block 336, the inferred value of the operating parameter and adjusted values of the debounce parameters are provided as inputs. In the embodiment shown, the adjusted values include a current value of a primary counter, a primary counter threshold value of a primary counter threshold debounce parameter, a current value of a secondary counter, a secondary counter threshold value of a secondary counter threshold debounce parameter, and a normal value range of a normal operation parameter. At block 338, if the inferred value of the operating parameter is within the normal value range, then the edge server 104 decrements the primary counter at block 340 and infers no event at block 342. However, if the inferred value of the operating parameter is outside the normal value range, then, at block 344, the edge server 104 increments the primary counter. Subsequently, at block 346, if the (incremented) value of the primary counter is less than or equal to the primary counter threshold value, then no event is inferred by the edge server 104 (block 340). However, if the value of the primary counter is greater than the primary counter threshold value, then, at block 348, the edge server 104 increments the secondary counter, and, at block 350, the edge server 104 resets the primary counter to a default value less than the primary counter threshold value. Next, at block 352, if the (incremented) value of the secondary counter is less than or equal to the secondary counter threshold value, then no event is inferred by the edge server 104 (block 340). However, if the value of the secondary counter is greater than the secondary counter threshold value, then, at block 354, the edge server 104 infers that an event has occurred for the networked actuator 112.

In the embodiment shown, the storage memory 174 of the edge server resources 166 includes a debounce database - that is, the debounce data store 198 - and an events database - that is, the events data store 200. However, in some other embodiments, the debounce database and/or the events database may be separate from the edge server resources 166. Furthermore, in the embodiment shown, each of the debounce database and the events database of the edge server 104 is persistent. That is, each of the debounce data store 198 and the events data store 200 is stored in the storage memory 174 on a persistent storage medium configured to retain at least the debounce database and the events database when powered and when unpowered.

Similarly, in the embodiment shown, storage memory 218 of the supervisory server resources 210 includes a debounce database - that is, the debounce data store 236 - and an events database - that is, the events data store 238. However, in some other embodiments, the debounce database and/or the events database may be separate from the supervisory server resources 210. Furthermore, in the embodiment shown, each of the debounce database and the events database of the supervisory server 102 is persistent. That is, each of the debounce data store 236 and the events data store 238 is stored in the storage memory 218 on a persistent storage medium configured to retain at least the debounce database and the events database when powered and when unpowered.

In the embodiment shown, the supervisory server resources 210 of the supervisory server 102 are independent from the edge server resources 166 of the edge server 104, and the edge server resources 166 are independent from the subsystem controller resources 130 of the subsystem controller 108. For example, in some embodiments, the supervisory server resources 210 may be located at a first location, the edge server resources 166 may be located at a second location different from the first location, and the subsystem controller resources 130 may be located at a third location different from the first and second locations. In such embodiments, the supervisory server resources 210, edge server resources 166, and subsystem controller resources 130 may communicate and send data and/or instructions to each other via wired and/or wireless network connections. As a more specific example, in some such embodiments, the supervisory server resources 210, edge server resources 166, and subsystem controller resources 130 may communicate via a telemetry protocol such as a real time telemetry transmission protocol ("R3TP"). However, in other embodiments, the supervisory server resources 210 may not be independent from the edge server resources 166, and the edge server resources 166 may not be independent from the subsystem controller resources 130. In some other embodiments, none of the supervisory server resources 210, edge server resources 166, and subsystem controller resources 130 may be independent from one another.

### Clauses

This disclosure includes but is not limited to the following clauses, which may be combined with other subject matter in this specification.
1. A system for networked device control, the system comprising:
   an edge server comprising edge-server resources configured to, at least:
   control a networked device;
   implement an edge-server machine-learning model; and
   cause the edge-server machine-learning model to generate, based on at least an operating parameter of the networked device and a current value of a debounce parameter of the networked device, an adjusted value of the debounce parameter,
   wherein the debounce parameter at least in part characterizes occurrence of events for the networked device.
2. The system of clause 1 wherein the edge-server resources are configured to cause the edge-server machine-learning model to generate the adjusted value of the debounce parameter based on, at least, a plurality of values of the operating parameter and the current value of debounce parameter.
3. The system of clause 1 wherein the edge-server resources are configured to cause the edge-server machine-learning model to generate the adjusted value of the debounce parameter by causing the edge-server machine-learning model to, at least:
   predict, based on at least the operating parameter, a degradation trend of the networked device; and
   generate, based on at least the degradation trend and the current value of the debounce parameter, the adjusted value of the debounce parameter.
4. The system of clause 3 wherein the edge-server resources are configured to cause the edge-server machine-learning model to predict the degradation trend based on, at least, a plurality of values of the operating parameter.
5. The system of any one of clauses 1 to 4 wherein the edge-server resources are further configured to, at least, receive sensor signals representing measurements of the operating parameter measured by a sensor.
6. The system of clause 5 wherein the edge-server resources are configured to receive the sensor signals from the sensor.
7. The system of clause 5 or 6 wherein the edge-server resources are further configured to, at least, in response to receiving a sensor signal representing a value of the operating parameter, infer the value of the operating parameter from the sensor signal.
8. The system of clause 5, 6, or 7 wherein the sensor comprises an optical sensor.
9. The system of clause 8 wherein the optical sensor comprises a camera.
10. The system of clause 9 wherein the camera comprises a multispectral camera.
11. The system of clause 9 wherein the camera comprises a hyperspectral camera.
12. The system of any one of clauses 5, 6, or 7 wherein the sensor comprises an X-ray detector.
13. The system of any one of clauses 1 to 12 wherein the edge-server resources are further configured to, at least, infer, based on at least a monitored parameter of the networked device and the current value of the debounce parameter, whether an event has occurred for the networked device.
14. The system of clause 13 wherein the monitored parameter comprises the operating parameter.
15. The system of clause 13 or 14 wherein the event comprises a change of state of the networked device.
16. The system of clause 13, 14, or 15 wherein the event comprises an error event of the networked device.
17. The system of any one of clauses 13 to 16 wherein:
   the debounce parameter comprises a time threshold parameter;
   the current value of the debounce parameter comprises a time value of the time threshold parameter; and
   the edge-server resources are configured to, when inferring whether the event has occurred for the networked device, infer that the event has occurred at least if the monitored parameter has deviated from a normal value range of the monitored parameter for a deviation time greater than the time value of the time threshold parameter.
18. The system of any one of clauses 13 to 16 wherein:
   the debounce parameter comprises a normal operation parameter;
   the current value of the debounce parameter comprises a normal value range of the normal operation parameter, the normal value range comprising at least one possible value of the monitored parameter; and
   the edge-server resources are configured to, when inferring whether the event has occurred for the networked device, infer that the event has occurred at least if the monitored parameter has deviated from the normal value range for a deviation time greater than a threshold time value.
19. The system of any one of clauses 13 to 16 wherein:
   the debounce parameter comprises a primary counter threshold parameter;
   the current value of the debounce parameter comprises a primary counter threshold value of the primary counter threshold parameter;
   the edge server resources are further configured to, at least:
      increment a primary counter if a current value of the monitored parameter is outside a normal value range of the monitored parameter; and
      decrement the primary counter if the current value of the monitored parameter is within the normal value range; and
      the edge-server resources are configured to, when inferring whether the event has occurred for the networked device, infer that the event has occurred at least if the primary counter is greater than the primary counter threshold value.
20. The system of any one of clauses 13 to 16 wherein:
   the debounce parameter comprises a normal operation parameter;
   the current value of the debounce parameter comprises a normal value range of the normal operation parameter, the normal value range comprising at least one possible value of the monitored parameter;
   the edge server resources are further configured to, at least:
      increment a primary counter if a current value of the monitored parameter is outside the normal value range; and
      decrement the primary counter if the current value of the monitored parameter is within the normal value range; and
      the edge-server resources are configured to, when inferring whether the event has occurred for the networked device, infer that the event has occurred at least if the primary counter is greater than a primary counter threshold value.
21. The system of any one of clauses 13 to 16 wherein:
   the debounce parameter comprises a primary counter threshold parameter;
   the current value of the debounce parameter comprises a primary counter threshold value of the primary counter threshold parameter;
   the edge server resources are further configured to, at least:
      increment a primary counter if a current value of the monitored parameter is outside a normal value range of the monitored parameter;
      decrement the primary counter if the current value of the monitored parameter is within the normal value range; and
      in response to the primary counter being greater than the primary counter threshold value, increment a secondary counter and set the primary counter to a default value less than the primary counter threshold value; and
      the edge-server resources are configured to, when inferring whether the event has occurred for the networked device, infer that the event has occurred at least if the secondary counter is greater than a secondary counter threshold value.
22. The system of any one of clauses 13 to 16 wherein:
   the debounce parameter comprises a secondary counter threshold parameter;
   the current value of the debounce parameter comprises a secondary counter threshold value of the secondary counter threshold parameter;
   the edge server resources are further configured to, at least:
      increment a primary counter if a current value of the monitored parameter is outside a normal value range of the monitored parameter;
      decrement the primary counter if the current value of the monitored parameter is within the normal value range; and
      in response to the primary counter being greater than a primary counter threshold value, increment a secondary counter and set the primary counter to a default value less than the primary counter threshold value; and
      the edge-server resources are configured to, when inferring whether the event has occurred for the networked device, infer that the event has occurred at least if the secondary counter is greater than the secondary counter threshold value.
23. The system of any one of clauses 13 to 16 wherein:
   the debounce parameter comprises a normal operation parameter;
   the current value of the debounce parameter comprises a normal value range of the normal operation parameter, the normal value range comprising at least one possible value of the monitored parameter;
   the edge server resources are further configured to, at least:
      increment a primary counter if a current value of the monitored parameter is outside the normal value range;
      decrement the primary counter if the current value of the monitored parameter is within the normal value range; and
      in response to the primary counter being greater than a primary counter threshold value, increment a secondary counter and set the primary counter to a default value less than the primary counter threshold value; and
      the edge-server resources are configured to, when inferring whether the event has occurred for the networked device, infer that the event has occurred at least if the secondary counter is greater than a secondary counter threshold value.
24. The system of clause 21, 22, or 23 wherein the edge server resources are further configured to, at least, decrement the secondary counter if the current value of the monitored parameter is within the normal value range.
25. The system of any one of clauses 13 to 24 when directly or indirectly dependent from clause 3 wherein the edge-server resources are further configured to, at least, when inferring whether the event has occurred for the networked device, infer whether the event has occurred based further on at least the degradation trend.
26. The system of any one of clauses 13 to 25 wherein the edge-server resources are further configured to, at least, in response to inferring that the event has occurred for the networked device, cause the edge-server machine-learning model to generate the adjusted value of the debounce parameter.
27. The system of any one of clauses 13 to 26 wherein the edge-server resources are further configured to, at least, in response to inferring that the event has occurred for the networked device:
   infer whether a corrective action by the networked device is required; and
   in response to inferring that the corrective action is required, control the networked device to perform the corrective action.
28. The system of clause 27 wherein the corrective action comprises reducing an operating speed of the networked device.
29. The system of clause 27 or 28 wherein the corrective action comprises shutting down the networked device.
30. The system of any one of clauses 13 to 29 wherein the edge-server resources are further configured to, at least, in response to inferring that the event has occurred for the networked device, record the event in an events database.
31. The system of clause 30 wherein the edge-server resources are further configured to, at least:
   retrieve an event record from the events database; and
   when inferring whether the event has occurred for the networked device, infer whether the event has occurred based further on at least the retrieved event record.
32. The system of any one of clauses 13 to 29 wherein the edge-server resources are further configured to, at least:
   retrieve an event record from an events database; and
   when inferring whether the event has occurred for the networked device, infer whether the event has occurred based further on at least the retrieved event record.
33. The system of clause 30, 31, or 32 wherein the events database is persistent.
34. The system of clause 33 wherein the events database is stored on a persistent storage medium configured to retain at least the events database when powered and when unpowered.
35. The system of any one of clauses 30 to 34 wherein the edge-server resources comprise the events database.
36. The system of any one of clauses 13 to 35 wherein the edge-server resources are further configured to, at least:
   in response to inferring that the event has occurred for the networked device, increment an event counter; and
   if the event counter is greater than an event counter threshold value, infer that a system-level event has occurred for the networked device.
37. The system of any one of clauses 1 to 36 wherein the edge-server resources are further configured to, at least, retrieve the current value of the debounce parameter from a debounce database.
38. The system of clause 37 wherein the edge-server resources are further configured to, at least, in response to generating the adjusted value of the debounce parameter, store the adjusted value of the debounce parameter in the debounce database.
39. The system of any one of clauses 1 to 36 wherein the edge-server resources are further configured to, at least, in response to generating the adjusted value of the debounce parameter, store the adjusted value of the debounce parameter in a debounce database.
40. The system of clause 38 or 39 wherein the edge-server resources are configured to store the adjusted value of the debounce parameter in the debounce database in place of the current value of the debounce parameter.
41. The system of any one of clauses 37 to 40 wherein the debounce database is persistent.
42. The system of clause 41 wherein the debounce database is stored on a persistent storage medium configured to retain at least the debounce database when powered and when unpowered.
43. The system of any one of clauses 37 to 42 wherein the edge-server resources comprise the debounce database.
44. The system of any one of clauses 1 to 43 wherein the edge-server resources store at least a plurality of codes defining the edge-server machine-learning model.
45. The system of any one of clauses 1 to 44 wherein the edge-server resources are configured to control the networked device by sending control signals to a subsystem controller configured to control the networked device in response to receiving the control signals.
46. The system of clause 45 further comprising the subsystem controller.
47. The system of clause 46 wherein the subsystem controller comprises subsystem-controller resources configured to, at least:
   receive control signals from the edge-server resources; and
   in response to receiving the control signals, control the networked device.
48. The system of clause 47 wherein the subsystem controller resources are independent of the edge-server resources.
49. The system of any one of clauses 1 to 48 wherein the edge-server resources are further configured to, at least, attempt to establish a connection to a supervisory server.
50. The system of clause 49 wherein the edge-server resources are configured to attempt to establish the connection to the supervisory server at least in response to the operating parameter.
51. The system of clause 49 or 50 wherein the edge-server resources are further configured to, at least, in response to establishing the connection to the supervisory server, send, to the supervisory server, a synchronization request designating the debounce parameter.
52. The system of clause 51 wherein the edge-server resources are further configured to, at least, receive, from the supervisory server, a synchronization response comprising a supervisory-server value of the debounce parameter.
53. The system of clause 52 when directly or indirectly dependent from clause 36 or 39 wherein the edge-server resources are further configured to, at least, in response to receiving the synchronization response, store the supervisory-server value of the debounce parameter in the debounce database.
54. The system of clause 53 wherein the edge-server resources are configured to store the supervisory-server value of the debounce parameter in place of the current value of the debounce parameter.
55. The system of clause 52, 53, or 54 further comprising the supervisory server, the supervisory server comprising supervisory-server resources configured to, at least:
   receive synchronization requests from at least the edge server; and
   in response to receiving, from the edge server, the synchronization request designating the debounce parameter, send, to the edge server, the synchronization response.
56. The system of clause 55 wherein the supervisory-server resources are independent of the edge-server resources.
57. The system of any one of clauses 1 to 56 wherein the operating parameter comprises a temperature of the networked device.
58. The system of any one of clauses 1 to 56 wherein the operating parameter comprises a fan speed of the networked device.
59. The system of any one of clauses 1 to 56 wherein the operating parameter comprises an error status of the networked device.
60. The system of any one of clauses 1 to 56 wherein the operating parameter comprises an operating speed of the networked device.
61. The system of any one of clauses 1 to 60 wherein the networked device comprises a networked actuator.
62. The system of clause 61 wherein the networked actuator comprises an air ejector.
63. The system of clause 61 or 62 wherein the networked actuator comprises a motor.
64. The system of clause 63 wherein the motor comprises an electric motor.
65. The system of any one of clauses 61 to 64 wherein the networked actuator comprises a robot.
66. The system of any one of clauses 61 to 65 wherein the networked actuator is operable to capture objects.
67. The system of clause 66 wherein the networked actuator is operable to capture the objects from a conveyor.
68. The system of clause 66 or 67 wherein the edge-server resources are further configured to, at least, infer an object capture success rate of the networked actuator based on the operating parameter.
69. The system of clause 66, 67, or 68 wherein the objects comprise solid waste.
70. The system of any one of clauses 66 to 69 wherein the objects comprise recyclable materials.
71. The system of any one of clauses 66 to 70 wherein the networked actuator is operable to release a captured object.
72. The system of clause 71 wherein the networked actuator is operable to release the captured object by propelling the captured object away from the networked actuator.
73. The system of clause 71 or 72 wherein the networked actuator is operable to release the captured object by depositing the captured object into a container.
74. The system of clause 71 or 72 when directly or indirectly dependent from clause 47 wherein the subsystem-controller resources are further configured to, at least:
   cause the networked actuator to capture an object from a first conveyor; and
   cause the networked actuator to deposit the object back onto the first conveyor.
75. The system of clause 71 or 72 when directly or indirectly dependent from clause 47 wherein the subsystem-controller resources are further configured to, at least:
   cause the networked actuator to capture an object from a first conveyor; and
   cause the networked actuator to deposit the object onto a second conveyor different from the first conveyor.
76. The system of any one of clauses 66 to 75 when directly or indirectly dependent from clause 47 wherein the subsystem-controller resources are further configured to, at least:
   select a capturable object based on at least a quality of the capturable object; and
   cause the networked actuator to capture the selected capturable object.
77. The system of any one of clauses 1 to 76 wherein:
   the edge-server resources are further configured to, at least, cause the edge-server machine-learning model to generate, based on at least an edge-server operating parameter of the edge server and a current value of an edge-server debounce parameter of the edge server, an adjusted value of the edge-server debounce parameter; and
   the edge-server debounce parameter at least in part characterizes occurrence of events for the edge server.
78. A control system comprising:
   an edge server comprising edge-server resources configured to, at least:
   control a networked device;
   implement an edge-server machine-learning model; and
   cause the edge-server machine-learning model to generate, based on at least an operating parameter of the system and a current value of a debounce parameter of the system, an adjusted value of the debounce parameter,
   wherein the debounce parameter at least in part characterizes occurrence of events for the system.
79. A method for networked device control, the method comprising:
   monitoring an operating parameter of the networked device;
   retrieving, with an edge server, a current value of a debounce parameter of the networked device, the debounce parameter at least in part characterizing occurrence of events for the networked device;
   causing, with the edge server, an edge-server machine-learning model to generate, based at least on the operating parameter and the current value of the debounce parameter, an adjusted value of the debounce parameter; and
   storing the adjusted value of the debounce parameter.
80. The method of clause 79 wherein causing the edge-server machine-learning model to generate the adjusted value of the debounce parameter comprises causing the edge-server machine-learning model to generate the adjusted value of the debounce parameter based on, at least, a plurality of values of the operating parameter and the current value of debounce parameter.
81. The method of clause 79 wherein causing the edge-server machine-learning model to generate the adjusted value of the debounce parameter comprises causing the edge-server machine-learning model to:
   predict, based on at least the operating parameter, a degradation trend of the networked device; and
   generate, based on at least the degradation trend and the current value of the debounce parameter, the adjusted value of the debounce parameter.
82. The method of clause 81 wherein causing the edge-server machine-learning model to predict the degradation trend comprises causing the edge-server machine-learning model to predict the degradation trend based on, at least, a plurality of values of the operating parameter.
83. The method of any one of clauses 79 to 82 wherein monitoring the operating parameters of the networked device comprises monitoring the operating parameters of the networked device with a sensor operable to measure the operating parameter of the networked device.
84. The method of clause 83 wherein monitoring the operating parameters of the networked device with the sensor comprises receiving, with the edge server, sensor signals representing measurements of the operating parameter measured by the sensor.
85. The method of clause 84 wherein receiving the sensor signals with the edge server comprises receiving the sensor signals from the sensor.
86. The method of clause 84 or 85 further comprising, in response to receiving a sensor signal representing a value of the operating parameter, inferring, with the edge server, the value of the operating parameter from the sensor signal.
87. The method of any one of clauses 83 to 86 wherein the sensor comprises an optical sensor.
88. The method of clause 87 wherein the optical sensor comprises a camera.
89. The method of clause 88 wherein the camera comprises a multispectral camera.
90. The method of clause 88 wherein the camera comprises a hyperspectral camera.
91. The method of any one of clauses 83 to 86 wherein the sensor comprises an X-ray detector.
92. The method of any one of clauses 79 to 91 further comprising inferring, with the edge server, whether an event has occurred for the networked device based on, at least, a monitored parameter of the networked device and the current value of the debounce parameter.
93. The method of clause 92 wherein the monitored parameter comprises the operating parameter.
94. The method of clause 92 or 93 wherein the event comprises a change of state of the networked device.
95. The method of clause 92, 93, or 94 wherein the event comprises an error event of the networked device.
96. The method of any one of clauses 92 to 95 wherein:
   the debounce parameter comprises a time threshold parameter;
   the current value of the debounce parameter comprises a time value of the time threshold parameter; and
   inferring whether the event has occurred for the networked device comprises inferring that the event has occurred at least if the monitored parameter has deviated from a normal value range of the monitored parameter for a deviation time greater than the time value of the time threshold parameter.
97. The method of any one of clauses 92 to 95 wherein:
   the debounce parameter comprises a normal operation parameter;
   the current value of the debounce parameter comprises a normal value range of the normal operation parameter, the normal value range comprising at least one possible value of the monitored parameter; and
   inferring whether the event has occurred for the networked device comprises inferring that the event has occurred at least if the monitored parameter has deviated from the normal value range for a deviation time greater than a threshold time value.
98. The method of any one of clauses 92 to 95 wherein:
   the debounce parameter comprises a primary counter threshold parameter;
   the current value of the debounce parameter comprises a primary counter threshold value of the primary counter threshold parameter; and
   inferring whether the event has occurred for the networked device comprises:
      incrementing, with the edge server, a primary counter if a current value of the monitored parameter is outside a normal value range of the monitored parameter;
      decrementing, with the edge server, the primary counter if the current value of the monitored parameter is within the normal value range; and
      inferring that the event has occurred at least if the primary counter is greater than the primary counter threshold value.
99. The method of any one of clauses 92 to 95 wherein:
   the debounce parameter comprises a normal operation parameter;
   the current value of the debounce parameter comprises a normal value range of the normal operation parameter, the normal value range comprising at least one possible value of the monitored parameter; and
   inferring whether the event has occurred for the networked device comprises:
      incrementing, with the edge server, a primary counter if a current value of the monitored parameter is outside the normal value range;
      decrementing, with the edge server, the primary counter if the current value of the monitored parameter is within the normal value range; and
      inferring that the event has occurred at least if the primary counter is greater than a primary counter threshold value.
100. The method of any one of clauses 92 to 95 wherein:
   the debounce parameter comprises a primary counter threshold parameter;
   the current value of the debounce parameter comprises a primary counter threshold value of the primary counter threshold parameter; and
   inferring whether the event has occurred for the networked device comprises:
      incrementing, with the edge server, a primary counter if a current value of the monitored parameter is outside a normal value range of the monitored parameter;
      decrementing, with the edge server, the primary counter if the current value of the monitored parameter is within the normal value range;
      in response to the primary counter being greater than the primary counter threshold value, incrementing, with the edge server, a secondary counter and setting the primary counter to a default value less than the primary counter threshold value; and
      inferring that the event has occurred at least if the secondary counter is greater than a secondary counter threshold value.
101. The method of any one of clauses 92 to 95 wherein:
   the debounce parameter comprises a secondary counter threshold parameter;
   the current value of the debounce parameter comprises a secondary counter threshold value of the secondary counter threshold parameter; and
   inferring whether the event has occurred for the networked device comprises:
      incrementing, with the edge server, a primary counter if a current value of the monitored parameter is outside a normal value range of the monitored parameter;
      decrementing, with the edge server, the primary counter if the current value of the monitored parameter is within the normal value range;
      in response to the primary counter being greater than a primary counter threshold value, incrementing, with the edge server, a secondary counter and setting the primary counter to a default value less than the primary counter threshold value; and
      inferring that the event has occurred at least if the secondary counter is greater than the secondary counter threshold value.
102. The method of any one of clauses 92 to 95 wherein:
   the debounce parameter comprises a normal operation parameter;
   the current value of the debounce parameter comprises a normal value range of the normal operation parameter, the normal value range comprising at least one possible value of the monitored parameter; and
   inferring whether the event has occurred for the networked device comprises:
      incrementing, with the edge server, a primary counter if a current value of the monitored parameter is outside the normal value range;
      decrementing, with the edge server, the primary counter if the current value of the monitored parameter is within the normal value range;
      in response to the primary counter being greater than a primary counter threshold value, incrementing, with the edge server, a secondary counter and setting the primary counter to a default value less than the primary counter threshold value; and
      inferring that the event has occurred at least if the secondary counter is greater than a secondary counter threshold value.
103. The method of clause 100, 101, or 102 wherein inferring whether the event has occurred for the networked device further comprises decrementing, with the edge server, the secondary counter if the current value of the monitored parameter is within the normal value range.
104. The method of any one of clauses 92 to 102 when directly or indirectly dependent from clause 81 wherein inferring whether the event has occurred for the networked device comprises inferring whether the event has occurred based further on at least the degradation trend.
105. The method of any one of clauses 92 to 104 wherein causing the edge-server machine-learning model to generate the adjusted value of the debounce parameter comprises causing the edge-server machine-learning model to generate the adjusted value of the debounce parameter in response to inferring that the event has occurred for the networked device.
106. The method of any one of clauses 92 to 105 further comprising, in response to inferring that the event has occurred for the networked device:
   inferring, with the edge server, whether a corrective action by the networked device is required; and
   in response to inferring that the corrective action is required, controlling, with the edge server, the networked device to perform the corrective action.
107. The method of clause 106 wherein the corrective action comprises reducing an operating speed of the networked device.
108. The method of clause 106 or 107 wherein the corrective action comprises shutting down the networked device.
109. The method of any one of clauses 92 to 108 further comprising, in response to inferring that the event has occurred for the networked device, recording, with the edge server, the event in an events database.
110. The method of clause 109 further comprising retrieving, with the edge server, an event record from the events database, wherein inferring whether the event has occurred for the networked device comprises inferring whether the event has occurred based further on at least the retrieved event record.
111. The method of any one of clauses 92 to 108 further comprising retrieving, with the edge server, an event record from an events database, wherein inferring whether the event has occurred for the networked device comprises inferring whether the event has occurred based further on at least the retrieved event record.
112. The method of clause 109, 110, or 111 wherein the events database is persistent.
113. The method of clause 112 further comprising storing the events database on a persistent storage medium configured to retain at least the events database when powered and when unpowered.
114. The method of any one of clauses 92 to 113 further comprising:
   in response to inferring that the event has occurred for the networked device, incrementing, with the edge server, an event counter; and
   if the event counter is greater than the event counter threshold value, inferring, with the edge server,
   that a system-level event has occurred for the networked device.
115. The method of any one of clauses 79 to 114 wherein retrieving the current value of the debounce parameter comprises retrieving, with the edge server, the current value of the debounce parameter from a debounce database.
116. The method of clause 115 wherein storing the adjusted value of the debounce parameter comprises storing, with the edge server, the adjusted value of the debounce parameter in the debounce database.
117. The method of any one of clauses 79 to 114 wherein storing the adjusted value of the debounce parameter comprises storing, with the edge server, the adjusted value of the debounce parameter in a debounce database.
118. The method of clause 116 or 117 wherein storing the adjusted value of the debounce parameter in the debounce database comprises storing the adjusted value of the debounce parameter in the debounce database in place of the current value of the debounce parameter.
119. The method of any one of clauses 115 to 118 wherein the debounce database is persistent.
120. The method of clause 119 further comprising storing the debounce database on a persistent storage medium configured to retain at least the debounce database when powered and when unpowered.
121. The method of any one of clauses 79 to 120 further comprising controlling the networked device with the edge server.
122. The method of clause 121 wherein controlling the networked device comprises sending control signals from the edge server to a subsystem controller configured to control the networked device in response to receiving the control signals.
123. The method of any one of clauses 79 to 122 further comprising attempting, with the edge server, to establish a connection to a supervisory server.
124. The method of clause 123 wherein attempting to establish the connection to the supervisory server comprises attempting to establish the connection to the supervisory server at least in response to the operating parameter.
125. The method of clause 123 or 124 further comprising, in response to establishing the connection to the supervisory server, sending, from the edge server to the supervisory server, a synchronization request designating the debounce parameter.
126. The method of clause 125 further comprising receiving, with the edge server, from the supervisory server, a synchronization response comprising a supervisory-server value of the debounce parameter.
127. The method of clause 126 when directly or indirectly dependent from clause 115 or 117 further comprising, in response to receiving the synchronization response with the edge server, storing, with the edge server, the supervisory-server value of the debounce parameter in the debounce database.
128. The method of clause 127 wherein storing the supervisory-server value of the debounce parameter in the debounce database comprises storing the supervisory-server value of the debounce parameter in the debounce database in place of the current value of the debounce parameter.
129. The method of any one of clauses 79 to 128 wherein the operating parameter comprises a temperature of the networked device.
130. The method of any one of clauses 79 to 128 wherein the operating parameter comprises a fan speed of the networked device.
131. The method of any one of clauses 79 to 128 wherein the operating parameter comprises an error status of the networked device.
132. The method of any one of clauses 79 to 128 wherein the operating parameter comprises an operating speed of the networked device.
133. The method of any one of clauses 79 to 132 wherein the networked device comprises a networked actuator.
134. The method of clause 133 wherein the networked actuator comprises an air ejector.
135. The method of clause 133 or 134 wherein the networked actuator comprises a motor.
136. The method of clause 135 wherein the motor comprises an electric motor.
137. The method of any one of clauses 133 to 136 wherein the networked actuator comprises a robot.
138. The method of any one of clauses 133 to 137 wherein the networked actuator is operable to capture objects.
139. The method of clause 138 wherein the networked actuator is operable to capture the objects from a conveyor.
140. The method of clause 138 or 139 further comprising inferring, with the edge server, an object capture success rate of the networked actuator based on the operating parameter.
141. The method of clause 138, 139, or 140 wherein the objects comprise solid waste.
142. The method of any one of clauses 138 to 141 wherein the objects comprise recyclable materials.
143. The method of any one of clauses 138 to 142 when directly or indirectly dependent from clause 121 further comprising causing the networked actuator to capture an object.
144. The method of clause 143 further comprising causing the networked actuator to release the captured object.
145. The method of clause 144 wherein causing the networked actuator to release the captured object comprises causing the networked actuator to propel the captured object away from the networked actuator.
146. The method of clause 144 or 145 wherein causing the networked actuator to release the captured object comprises causing the networked actuator to deposit the captured object into a container.
147. The method of clause 144 or 145 wherein:
   causing the networked actuator to capture the object comprises causing the networked actuator to capture the object from a first conveyor; and
   causing the networked actuator to release the captured object comprises causing the networked actuator to deposit the captured object back onto the first conveyor.
148. The method of clause 144 or 145 wherein:
   causing the networked actuator to capture the object comprises causing the networked actuator to capture the object from a first conveyor; and
   causing the networked actuator to release the captured object comprises causing the networked actuator to deposit the captured object onto a second conveyor different from the first conveyor.
149. The method of any one of clauses 138 to 148 when directly or indirectly dependent from clause 121 further comprising:
   selecting a capturable object based on at least a quality of the object; and
   causing the networked actuator to capture the selected capturable object.
150. The method of any one of clauses 79 to 149 further comprising causing, with the edge server, the edge-server machine-learning model to generate, based on at least an edge-server operating parameter of the edge server and a current value of an edge-server debounce parameter of the edge server, an adjusted value of the edge-server debounce parameter, wherein the edge-server debounce parameter at least in part characterizes occurrence of events for the edge server.
151. A control method for a system comprising:
   controlling, with an edge server of the system, a networked device of the system;
   monitoring an operating parameter of the system;
   retrieving, with the edge server, a current value of a debounce parameter of the system, the debounce parameter at least in part characterizing occurrence of events for the system;
   causing, with the edge server, an edge-server machine-learning model to generate, based at least on the operating parameter and the current value of the debounce parameter, an adjusted value of the debounce parameter; and
   storing the adjusted value of the debounce parameter.

Although specific embodiments have been described and illustrated, such embodiments should be considered illustrative only and not as limiting the invention as construed according to the accompanying claims.

## Claims

1. A system for networked device control, the system comprising:
an edge server comprising edge-server resources configured to, at least:
control a networked device;
implement an edge-server machine-learning model; and
cause the edge-server machine-learning model to generate, based on at least an operating parameter of the networked device and a current value of a debounce parameter of the networked device, an adjusted value of the debounce parameter,
wherein the debounce parameter at least in part characterizes occurrence of events for the networked device.

2. The system of claim 1 wherein the edge-server resources are configured to cause the edge-server machine-learning model to generate the adjusted value of the debounce parameter based on, at least, a plurality of values of the operating parameter and the current value of debounce parameter.

3. The system of claim 1 wherein the edge-server resources are configured to cause the edge-server machine-learning model to generate the adjusted value of the debounce parameter by causing the edge-server machine-learning model to, at least:
predict, based on at least the operating parameter, a degradation trend of the networked device; and
generate, based on at least the degradation trend and the current value of the debounce parameter, the adjusted value of the debounce parameter.

4. The system of claim 3 wherein the edge-server resources are configured to cause the edge-server machine-learning model to predict the degradation trend based on, at least, a plurality of values of the operating parameter.

5. The system of any one of claims 1 to 4 wherein the edge-server resources are further configured to, at least, receive sensor signals representing measurements of the operating parameter measured by a sensor.

6. The system of claim 5 wherein the edge-server resources are configured to receive the sensor signals from the sensor.

7. The system of claim 5 or 6 wherein the edge-server resources are further configured to, at least, in response to receiving a sensor signal representing a value of the operating parameter, infer the value of the operating parameter from the sensor signal.

8. The system of claim 5, 6, or 7 wherein the sensor comprises an optical sensor.

9. The system of claim 8 wherein the optical sensor comprises a hyperspectral camera.

10. The system of claim 5, 6, or 7 wherein the sensor comprises an X-ray detector.

11. The system of any one of claims 1 to 10 wherein the edge-server resources are further configured to, at least, infer, based on at least a monitored parameter of the networked device and the current value of the debounce parameter, whether an event has occurred for the networked device.

12. The system of claim 11 wherein:
the debounce parameter comprises a time threshold parameter;
the current value of the debounce parameter comprises a time value of the time threshold parameter; and
the edge-server resources are configured to, when inferring whether the event has occurred for the networked device, infer that the event has occurred at least if the monitored parameter has deviated from a normal value range of the monitored parameter for a deviation time greater than the time value of the time threshold parameter.

13. The system of claim 11 wherein:
the debounce parameter comprises a normal operation parameter;
the current value of the debounce parameter comprises a normal value range of the normal operation parameter, the normal value range comprising at least one possible value of the monitored parameter; and
the edge-server resources are configured to, when inferring whether the event has occurred for the networked device, infer that the event has occurred at least if the monitored parameter has deviated from the normal value range for a deviation time greater than a threshold time value.

14. The system of claim 11 wherein:
the debounce parameter comprises a primary counter threshold parameter;
the current value of the debounce parameter comprises a primary counter threshold value of the primary counter threshold parameter;
the edge server resources are further configured to, at least:
increment a primary counter if a current value of the monitored parameter is outside a normal value range of the monitored parameter; and
decrement the primary counter if the current value of the monitored parameter is within the normal value range; and
the edge-server resources are configured to, when inferring whether the event has occurred for the networked device, infer that the event has occurred at least if the primary counter is greater than the primary counter threshold value.

15. The system of any one of claims 1 to 14 wherein the networked device comprises a networked actuator.

16. A method for networked device control, the method comprising:
monitoring an operating parameter of the networked device;
retrieving, with an edge server, a current value of a debounce parameter of the networked device, the debounce parameter at least in part characterizing occurrence of events for the networked device;
causing, with the edge server, an edge-server machine-learning model to generate, based at least on the operating parameter and the current value of the debounce parameter, an adjusted value of the debounce parameter; and
storing the adjusted value of the debounce parameter.

17. The method of claim 16 wherein causing the edge-server machine-learning model to generate the adjusted value of the debounce parameter comprises causing the edge-server machine-learning model to:
predict, based on, at least, a plurality of values of the operating parameter, a degradation trend of the networked device; and
generate, based on at least the degradation trend and the current value of the debounce parameter, the adjusted value of the debounce parameter.

18. The method of claim 16 or 17 further comprising inferring, with the edge server, whether an event has occurred for the networked device based on, at least, a monitored parameter of the networked device and the current value of the debounce parameter.

19. The method of claim 18 wherein:
the debounce parameter comprises a normal operation parameter;
the current value of the debounce parameter comprises a normal value range of the normal operation parameter, the normal value range comprising at least one possible value of the monitored parameter; and
inferring whether the event has occurred for the networked device comprises inferring that the event has occurred at least if the monitored parameter has deviated from the normal value range for a deviation time greater than a threshold time value.

20. The method of claim 18 wherein:
the debounce parameter comprises a normal operation parameter;
the current value of the debounce parameter comprises a normal value range of the normal operation parameter, the normal value range comprising at least one possible value of the monitored parameter; and
inferring whether the event has occurred for the networked device comprises:
incrementing, with the edge server, a primary counter if a current value of the monitored parameter is outside the normal value range;
decrementing, with the edge server, the primary counter if the current value of the monitored parameter is within the normal value range; and
inferring that the event has occurred at least if the primary counter is greater than a primary counter threshold value.
